(19) Europäisches Patentamt
European Patent Office
Office européen des brevets

(11) EP 1 956 048 A1

(12) EUROPEAN PATENT APPLICATION
published in accordance with Art. 158(3) EPC

(43) Date of publication:
**13.08.2008 Bulletin 2008/33**

(21) Application number: **06822868.3**

(22) Date of filing: **02.11.2006**

(51) Int Cl.:
***C08L 77/00*** *(2006.01)* ***C08K 5/5313*** *(2006.01)*
***C08L 71/12*** *(2006.01)*

(86) International application number:
**PCT/JP2006/321948**

(87) International publication number:
**WO 2007/055147 (18.05.2007 Gazette 2007/20)**

(84) Designated Contracting States:
**DE FR**

(30) Priority: **10.11.2005 JP 2005326454**
**09.12.2005 JP 2005355583**
**27.03.2006 JP 2006085353**

(71) Applicant: **Asahi Kasei Chemicals Corporation**
**Tokyo 100-8440 (JP)**

(72) Inventors:
- **FURUKAWA, Hiroaki**
  **Tokyo 100-8440 (JP)**
- **MIYOSHI, Takaaki**
  **Tokyo 100-8440 (JP)**
- **SHIKANO, Yasukazu**
  **Tokyo 100-8440 (JP)**
- **DOKI, Makoto**
  **Tokyo 100-8440 (JP)**

(74) Representative: **HOFFMANN EITLE**
**Patent- und Rechtsanwälte**
**Arabellastrasse 4**
**81925 München (DE)**

# (54) RESIN COMPOSITION EXCELLENT IN FLAME RETARDANCE

(57) The present invention relates to a resin composition containing (A) a polyamide having a viscosity number (as measured in the 96% sulfuric acid according to ISO 307 (1997)) of from 50 ml / g to 250 ml / g; (B) a polyphenylene ether; and (C) a phosphinate represented by a particular formula. The resin composition according to the present invention is excellent in flame retardancy, impact resistance and thin-wall moldability and can significantly suppress gas generation during the molding process and substantially inhibit the generation of deposits on a mold during injection molding. As a result, a molded product thereof excellent in surface appearance can be provided.



Printed by Jouve, 75001 PARIS (FR)

## Description

Technical Field

The present invention relates to a resin composition which is excellent in flame retardancy, impact resistance, and moldability into thin-walled components such as a connector in the electric and electronic field, and which has excellent characteristics enabling the significant suppression of gas generation during processing and the substantial inhibition of generation of deposits on a mold (mold deposits) during injection molding. The resin composition can be suitably used in components including electrical and electronic components such as a connector, a breaker, and a magnet switch, electrical components in the automobile field, typified by a relay box, and components applicable with a surface-mount technology (hereinafter sometimes referred to as SMT), requiring lead-free solder resistance.

Background Art

Polyamides have previously been used in many fields including automobile components, machine components, and electrical and electronic components because they are excellent in properties such as mechanical strength, heat resistance and chemical resistance.

Among others, polyamide 6,6 has conventionally been used in a relay box installed in an automobile engine room; however, it has had a problem of suffering an increased dimensional change during water absorption. As such, a polyamide / polyphenylene ether alloy has recently been gradually being substituted therefor. At present, automobile components, machine components, and electrical and electronic components tend to adopt more complex shapes and further are in a trend of becoming smaller and more thin-walled.

A recent trend has been for the demand characteristic of flame retardancy to be newly listed for vehicle components such as a relay box in view of preventing a vehicle fire.

As a technique for flame-retarding a polyamide has been heretofore known, for example, a method which involves adding a chlorine-substituted polycyclic compound or a bromine-based flame retardant to the polyamide resin. Known examples of the bromine-based flame retardant may include decabromodiphenyl ether, brominated polystyrene, brominated polyphenylene ether, brominated crosslinked aromatic polymers, and brominated styrene-maleic anhydride polymer.

Halogen-free triazine flame retardants have also received attention and studied in large numbers in recent years against a background of increased concern over environmental issues or the like. Well-known are, for example, a technique using melamine as a flame retardant, a technique using cyanuric acid, and a technique using melamine cyanurate. On the other hand, there have been studied a halogen-free flame-retarding technique using the intumescent flame retardant melamine phosphate, melamine pyrophosphate or melamine polyphosphate in a glass-fiber reinforced polyamide resin, a flame-retarding technique using melamine polyphosphate in combination with a charring catalyst and/or a char-forming agent in an inorganic reinforced polyamide resin, and a flame-retardant combination technique combining a phosphinate salt and a reaction product between melamine and a phosphoric acid.

More recently, there have been proposed a technique using a phosphinate to flame-retard a polyamide / polyphenylene ether resin composition (Patent Document 1) and a technique using a phosphinate to flame-retard a resin composition in which a polyamide resin and a polyphenylene resin are contained in a styrene resin and / or a polyester resin (Patent Document 2). However, SMT-applicable components typified by a relay box, a connector and the like of recent years have each been made in a more complex, smaller and more thin-walled shape, posing problems that deposits called mold deposits adhere to the mold during injection molding, that a defective appearance of a molded piece (hereinafter sometimes referred to as silver streaks) occurs due to gas generated during the molding, and further that insufficient flowability does not enable the successful molding of a thin-walled component. The techniques proposed above cannot solve these problems; it has been essential to solve them. Thus, it has been awaited to develop a new technique which solves the above problems and can satisfy requirements for SMT-applicable components typified by the relay box and the connector of recent years.

[Patent Document 1] International Patent Publication WO 2005/118698 pamphlet
[Patent Document 2] JP-A-2001-335699

Disclosure of the Invention

Problems to be Solved by the Invention

An object of the present invention is to provide a resin composition excellent in flame retardancy, impact

resistance and moldability into a thin-walled component and capable of giving a molded product excellent in surface appearance. Specifically, the object of the present invention is to provide a resin composition which is excellent in flowability and further capable of significantly suppressing gas generation during processing and substantially inhibiting the generation of deposits on a mold (hereinafter sometimes referred to as mold deposits) during injection molding.

Means for Solving the Problems

As a result of intensive studies for solving the above problems, the present inventors have found that, in flame-retarding a polyamide / polyphenylene ether composition with a phosphinate as a flame retardant, the above problems can be solved by setting the viscosity of the polyamide to within a particular range, thereby accomplishing the present invention.

Thus, the present invention relates to a composition comprising a polyamide with a particular viscosity, a polyphenylene ether, and a phosphinate. More specifically, the present invention is as follows:

1. a resin composition comprising: a polyamide (A); a polyphenylene ether (B); and at least one phosphinate (C) selected from the group consisting of a phosphinate represented by formula (I) below, a diphosphinate represented by formula (II) below, and condensation products thereof, wherein the polyamide (A) has a viscosity number (as measured in the 96% sulfuric acid according to ISO 307 (1997)) of from 50 ml/g to 250 ml/g, the formulas (I) and (II) being represented by:

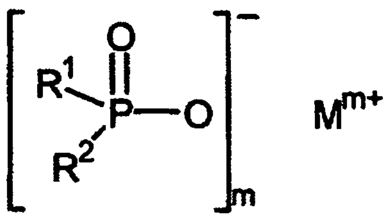

(I)

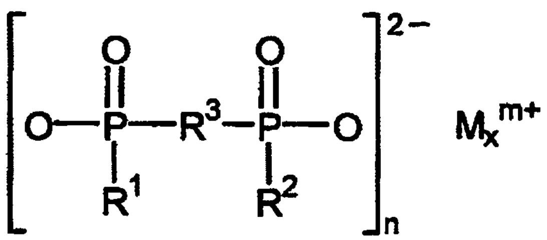

(II)

wherein $R^1$ and $R^2$ are the same or different and each represent straight-chain or branched $C_1$ to $C_6$ alkyl and / or aryl, or phenyl; $R^3$ represents straight-chain or branched $C_1$ to $C_{10}$ alkylene, $C_6$ to $C_{10}$ arylene, $C_6$ to $C_{10}$ alkylarylene, or $C_6$ to $C_{10}$ arylalkylene; M represents at least one selected from the group consisting of calcium (ion), magnesium (ion), aluminium (ion), zinc (ion), bismuth (ion), manganese (ion), sodium (ion), potassium (ion), and a protonated nitrogenous base; m represents 2 or 3; n represents 1 to 3; and x represents 1 or 2.).

2. the resin composition according to 1 above, wherein the viscosity number (as measured in the 96% sulfuric acid according to ISO 307 (1997)) of the polyamide (A) is from 70 ml/g (inclusive) to 150 ml/g (inclusive).
3. the resin composition according to 1 or 2 above, wherein the viscosity number (as measured in the 96% sulfuric acid according to ISO 307 (1997)) of the polyamide (A) is from 100 ml/g (inclusive) to 150 ml/g (inclusive).
4. the resin composition according to any one of 1 to 3 above, wherein the polyamide (A) is a semiaromatic polyamide.
5. the resin composition according to 4 above, wherein the semiaromatic polyamide comprises (a) dicarboxylic acid units comprising 60 to 100 mol% of terephthalic acid and (b) diamine units comprising 60 to 100 mol% of (b-1) 1,9-nonanediamine units and (b-2) 2-methyl-1,8-octanediamine units.
6. the resin composition according to 4 above, wherein the semiaromatic polyamide has a molar ratio of (b-1) 1,9-nonanediamine units to (b-2) 2-methyl-1,8-octanediamine units of from 60/40 to 95/5 for the diamine units.
7. the resin composition according to any one of 1 to 6 above, wherein the polyamide (A) has a terminal amino

group concentration of from 5 μmol/g (inclusive) to 60 μmol/g (inclusive).

8. the resin composition according to 1 above, wherein the component (C) has an average particle diameter of from 0.5 μm (inclusive) to 40 μm (inclusive).

9. the resin composition according to 1 above, wherein a quantitative ratio of the polyamide (A) to the polyphenylene ether (B) is from 40 to 70 parts by mass of the polyamide (A) to 60 to 30 parts by mass of the polyphenylene ether (B) based on 100 parts by masss of the total of (A) and (B).

10. the resin composition according to 1 above, wherein an amount of the phosphinate (C) is from 1 to 50 parts by mass based on 100 parts by mass of the total of the polyamide (A) and the polyphenylene ether (B).

11. the resin composition according to claim 1, further comprising an appearance-improving agent selected from the group consisting of mineral oil and wax as component (D).

12. the resin composition according to 11 above, wherein an amount of the appearance-improving agent as the component (D) is from 0.1 to 10 parts by mass based on 100 parts by mass of the total of the polyamide (A) and the polyphenylene ether (B).

13. the resin composition according to claim 1, wherein the phosphinate as component (C) comprises 90 % by weight or more of a phosphinate represented by formula (I):

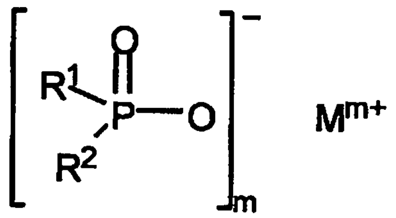

(I)

wherein $R^1$ and $R^2$ are the same or different and each represent straight-chain or branched $C_1$ to $C_6$ alkyl and / or aryl, or phenyl; M represents at least one selected from the group consisting of calcium (ion), magnesium (ion), aluminium (ion), zinc (ion), bismuth (ion), manganese (ion), sodium (ion), potassium (ion), and a protonated nitrogenous base; and m represents 2 or 3.

14. the resin composition according to 1 above, further comprising an impact modifier as component (E), which comprises a block copolymer containing at least one block composed mainly of an aromatic vinyl compound and at least one block composed mainly of a conjugated diene compound, and / or a hydrogenated product of the block copolymer.

15. the resin composition according to 1 above, further comprising, as component (F), 1 to 70 % by weight of an inorganic filler based on 100 % by weight of the whole resin composition inclusive of the inorganic filler.

16. a process for producing a resin composition comprising: a polyamide (A); a polyphenylene ether (B); and at least one phosphinate (C) selected from the group consisting of a phosphinate represented by formula (I) below, a diphosphinate represented by formula (II) below, and condensation products thereof, comprising:

adding the component (C) into a molten mixture of the component (A) and the component (B), the formulas (I) and (II) being represented by:

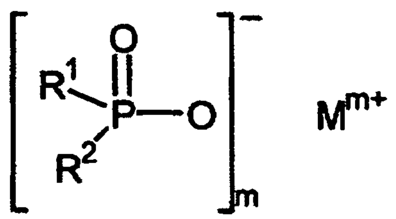

(I)

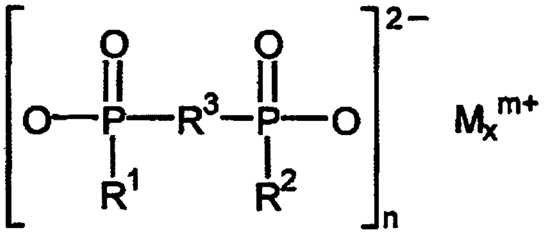

(II)

wherein $R^1$ and $R^2$ are the same or different and each represent straight-chain or branched $C_1$ to $C_6$ alkyl and / or aryl, or phenyl; $R^3$ represents straight-chain or branched $C_1$ to $C_{10}$ alkylene, $C_6$ to $C_{10}$ arylene, $C_6$ to $C_{10}$ alkylarylene, or $C_6$ to $C_{10}$ arylalkylene; M represents at least one selected from the group consisting of calcium (ion), magnesium (ion), aluminium (ion), zinc (ion), bismuth (ion), manganese (ion), sodium (ion), potassium (ion), and a protonated nitrogenous base; m represents 2 or 3; n represents 1 to 3; and x represents 1 or 2.

17. a process for producing a resin composition comprising: a polyamide (A); a polyphenylene ether (B); at least one phosphinate (C) selected from the group consisting of a phosphinate represented by formula (I) below, a diphosphinate represented by formula (II) below, and condensation products thereof; an appearance-improving agent (D); and an impact modifier (E), comprising at least the following two steps of:

(1) mixing the appearance-improving agent (D) with at least one selected from the group consisting of the polyamide (A), the polyphenylene ether (B), and the impact modifier (E) to produce a master batch; and
(2) melt-kneading the master batch with the residual components, the formulas (I) and (II) being represented by:

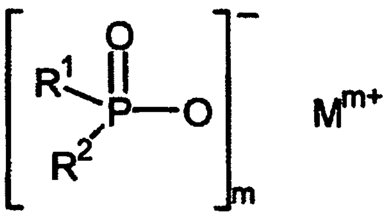

(I)

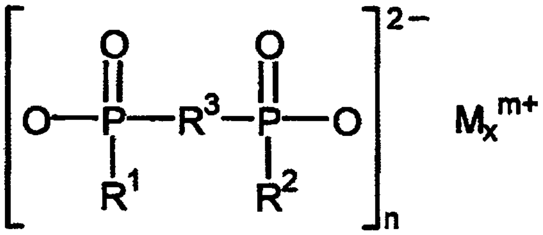

(II)

wherein $R^1$ and $R^2$ are the same or different and each represent straight-chain or branched $C_1$ to $C_6$ alkyl and / or aryl, or phenyl; $R^3$ represents straight-chain or branched $C_1$ to $C_{10}$ alkylene, $C_6$ to $C_{10}$ arylene, $C_6$ to $C_{10}$ alkylarylene, or $C_6$ to $C_{10}$ arylalkylene; M represents at least one selected from the group consisting of calcium (ion), magnesium (ion), aluminium (ion), zinc (ion), bismuth (ion), manganese (ion), sodium (ion), potassium (ion), and a protonated nitrogenous base; m represents 2 or 3; n represents 1 to 3; and x represents 1 or 2.

18. a pellet obtained by the process according to 16 or 17 above.
19. a molded product obtained from the resin composition according to any one of 1 to 18 above.
20. a surface-mount technology applicable component obtained from the resin composition according to any one of 1 to 18 above.

## Advantageous Effects of the Invention

The use of the present invention provides a resin composition which is excellent in flame retardancy, impact resistance, and moldability into thin-walled components and capable of significantly suppressing gas generation during the molding process and substantially inhibiting the generation of deposits on a mold (mold deposits) during injection molding. As a result, a molded product excellent in surface appearance can be provided.

## Best Mode for Carrying Out the Invention

The content of the present invention will now be described in detail.

The polyamide which may be used in the present invention may be any which has amide bonding (-NH-C (=O)-) in the repeating units of the polymer main chain.

Generally, polyamides are each obtained by the ring-opening polymerization of a lactam, the polycondensation of a diamine and a dicarboxylic acid, the polycondensation of an ω-aminocarboxylic acid, or the like. However, the polyamide of the present invention is not intended to be limited to resins obtained by these processes.

Examples of the above diamine include the three primary categories of diamines: aliphatic, alicyclic and aromatic diamines. Specific examples of the diamine may include aliphatic diamines such as tetramethylenediamine, hexamethylenediamine, undecamethylenediamine, dodecamethylenediamine, tridecamethylenediamine, 2,2,4-trimethylhexamethylenediamine, 2,4,4-trimethylhexamethylenediamine, 5-methylnonamethylenediamine, 1,9-nonanediamine, 2-methyl-1,8-octanediamine, ethylenediamine, propylenediamine, 1,4-butanediamine, 1,6-hexanediamine, 1,8-octanediamine, 1,10-decanediamine, 1,12-dodecanediamine, 3-methyl-1,5-pentanediamine, 2,2,4-trimethyl-1,6-hexanediamine, 2,4,4-trimethyl-1,6-hexanediamine, and 5-methyl-1,9-nonanediamine; 1,3-bisaminomethylcyclohexane; 1,4-bisaminomethylcyclohexane; m-phenylenediamine; p-phenylenediamine; m-xylylenediamine; and p-xylylenediamine.

Examples of the dicarboxylic acid may include the three primary categories of dicarboxylic acids: aliphatic, alicyclic and aromatic dicarboxylic acids. Specific examples of the dicarboxylic acid may include adipic acid, suberic acid, azelaic acid, sebacic acid, dodecanedioic acid, 1,1,3-dodecanedioic acid, 1,3-cyclohexanedicarboxylic acid, terephthalic acid, isophthalic acid, naphthalenedicarboxylic acid, and dimer acid.

Specific examples of the lactam may include ε-caprolactam, enantholactam, and ω-laurolactam.

Specific examples of the aminocarboxylic acid may include ε-aminocaproic acid, 7-aminoheptanoic acid, 8-aminooctanoic acid, 9-aminonanoic acid, 11-aminoundecanoic acid, 12-aminododecanoic acid, and 13-aminotridecanoic acid.

According to the present invention, the lactam, diamine, dicarboxylic acid and ω-aminocarboxylic acid may be polycondensed alone, or used in the form of a copolyamide obtained by the polycondensation of a mixture of two or more thereof.

A product can also be suitably used which is obtained by polymerizing the lactam, diamine, dicarboxylic acid or ω-aminocarboxylic acid until the stage of a low molecular weight oligomer in a polymerization reactor, followed by converting the oligomer into a high molecular weight polymer using an extruder or the like.

Examples of the polyamide which may be particularly suitably used in the present invention may include polyamide 6; polyamide 6, 6; polyamide 4, 6; polyamide 11; polyamide 12; polyamide 6, 10; polyamide 6, 12; polyamide 6/6, 6; polyamide 6/6, 12; polyamide MXD (m-xylylenediamine), 6; polyamide 6, T; polyamide 9, T; polyamide 6, I; polyamide 6/6, T; polyamide 6/6, I; polyamide 6, 6/6 T; polyamide 6, 6/6, I; polyamide 6/6, T/6, I; polyamide 6, 6/6, T/6, I; polyamide 6/12/6, T; polyamide 6, 6/12/6, T; polyamide 6/12/6, I; and polyamide 6, 6/12/6, I. Polyamides may also be used, each of which is obtained by copolymerizing a plurality of polyamides of the above polyamides using an extruder or the like. Among these, a preferred polyamide is at least one polyamide selected from: aliphatic polyamides such as polyamide 6; polyamide 6, 6; polyamide 4, 6; polyamide 11; and polyamide 12; and semiaromatic polyamides such as polyamide 9; T, polyamide 6/6, T; polyamide 6, 6/6, T; polyamide 6, 6/6, I; and polyamide MXD, 6. Most preferred is at least one polyamide selected from the group consisting of polyamide 6, 6; polyamide 6; polyamide 9, T.

The polyamide used in the present invention is required to have a viscosity number of from 50 ml/g to 250 ml/g as measured in the 96% sulfuric acid according to ISO 307 (1994). Setting the polyamide viscosity number to 50 ml/g or more improves the flame retardancy as well as the processability in extrusion or the like and significantly suppresses the generation of gas during molding. It also reduces the generation of mold deposits and therefore can dramatically increase the number of shots at which normal molding is possible during injection molding, which results in a significant improvement in the moldability. Setting the viscosity number to 250 ml/g or less enables the exertion of a new effect such as an improvement in the moldability into a thin-walled molded product in addition to the above effects.

The lower limit is preferably 70 ml/g, more preferably 100 ml/g. The upper limit is preferably 200 ml/g, most preferably 150 ml/g.

When the polyamide used in the present invention is a semiaromatic polyamide such as polyamide 9, T, the preferable viscosity range is slightly different. Here, the lower limit of the viscosity number is preferably 70 ml/g, more

preferably 100 ml/g. The upper limit is preferably 150 ml/g, most preferably 120 ml/g.

The various characteristics which are technical advantages of the present invention significantly vary depending on the viscosity number of the polyamide; the use of the polyamide having a viscosity number within a particular range specifically improves the characteristics.

The polyamide usable in the resin composition according to the present invention may be a mixture of a plurality of polyamides having different viscosity numbers. When a plurality of polyamides are used, the polyamides preferably comprise 50 % by weight or more of polyamides having viscosity numbers within the above range (based on 100 % by weight of all of the polyamides). More preferably, the polyamide mixture itself has a viscosity number within the scope of the claims of the present invention. The polyamide mixture having a viscosity number within the above range can be easily determined by actually measuring the viscosity number of a mixture in which polyamides are mixed at a desired mixing ratio.

When a semiaromatic polyamide is used as the polyamide in the present invention, the semiaromatic polyamide described below in detail is preferably employed.

The semiaromatic polyamide capable of being preferably used preferably comprises 60 to 100 mol% of terephthalic acid units as constituent dicarboxylic acid units (a). The content of the terephthalic acid units in the dicarboxylic acid units (a) is more preferably in the range of from 75 to 100 mol%, still more preferably in the range of from 90 to 100 mol%; most preferably, substantially all of the dicarboxylic acid units are terephthalic acid units.

As described above, the dicarboxylic acid units (a) may contain dicarboxylic acid units other than terephthalic acid units if the content thereof is 40 mol% or less. Examples of the other dicarboxylic acid unit can may include units derived from: an aliphatic dicarboxylic acid such as malonic acid, dimethylmalonic acid, succinic acid, glutaric acid, adipic acid, 2-methyladipic acid, trimethyladipic acid, pimelic acid, 2,2-dimethylglutaric acid, 3,3-diethylsuccinic acid, azelaic acid, sebacic acid, and suberic acid; an alicyclic dicarboxylic acid such as 1,3-cyclopentanedicarboxylic acid and 1,4-cyclohexanedicarboxylic acid; and an aromatic dicarboxylic acid such as isophthalic acid, 2,6-naphthalenedicarboxylic acid, 2,7-naphthalenedicarboxylic acid, 1,4-naphthalenedicarboxylic acid, 1,4-phenylenedioxydiacetic acid, 1,3-phenylenedioxydiacetic acid, diphenic acid, diphenylmethane-4,4'-dicarboxylic acid, diphenylsulfone-4,4'-dicarboxylic acid, and 4,4'-biphenyldicarboxylic acid. Of these, one, or two or more may be used. Among others, preferred is a unit derived from an aromatic dicarboxylic acid. In addition, units derived from a polyvalent carboxylic acid such as trimellitic acid, trimesic acid and pyromellitic acid may be contained in such a range that melt-molding is possible.

The dicarboxylic acid units (a) more preferably have a content of the other dicarboxylic acid units of 25 mol% or less, still more preferably 10 mol% or less, and most preferably contain substantially no other dicarboxylic acid units.

The diamine units (b) being a constituent of the semiaromatic polyamide usable in the present invention preferably contain from 60 to 100 mol% of the total of 1,9-nonamethylenediamine units (b-1) and 2-methyl-1,8-octamethylenediamine units (b-2).

The content of 1,9-nonamethylenediamine units (b-1) and 2-methyl-1,8-octamethylenediamine units (b-2) in the diamine units (b) is more preferably from 75 to 100 mol%, still more preferably from 90 to 100 mol%; most preferably, substantially all of the diamine units are formed from 1,9-nonamethylenediamine units (b-1) and 2-methyl-1,8-octamethylenediamine units (b-2).

According to the present invention, the diamine units (b) in the semiaromatic polyamide may contain diamine units other than 1,9-nonamethylenediamine units and 2-methyl-1,8-octamethylenediamine units if the content thereof is 40 mol% or less. Examples of the other diamine unit here can include units derived from: aliphatic diamines such as ethylenediamine, propylenediamine, 1,4-butanediamine, 1,6-hexanediamine, 1,8-octamethylenediamine, 1,10-decanediamine, 1,12-dodecanediamine, 3-methyl-1,5-pentanediamine, 2,2,4-trimethyl-1,6-hexanediamine, 2,4,4-trimethyl-1,6-hexanediamine, and 5-methyl-1,9-nonamethylenediamine; alicyclic diamines such as cyclohexanediamine, methylcyclohexanediamine, and isophoronediamine; and aromatic diamines such as p-phenylenediamine, m-phenylenediamine, xylylenediamine, 4,4'-diaminodiphenylmethane, 4,4'-diaminodiphenylsulfone, and 4,4'-diaminodiphenyl ether. Of these, one, or two or more may be contained. The diamine units (b) more preferably have a content of the other diamine units of 25 mol% or less, still more preferably 10 mol% or less, and most preferably contain substantially no other diamine units.

The rate of 1,9-nonamethylenediamine units (b-1) in the diamine units is preferably 60 mol% as the lower limit based on 100 mol% of the total of 1,9-nonamethylenediamine units (b-1) and 2-methyl-1,8-octamethylenediamine units (b-2). The lower limit is more preferably 75 mol%, still more preferably 80 mol%. The higher lower limit can increase the heat resistance and reduce the water-absorbing property. The upper limit is preferably 95 mol%, more preferably 90 mol%, still more preferably 85 mol%. The lower upper limit enhances the impact resistance and mechanical characteristics such as tensile elongation and provides effects such as improvement in the surface appearance of a molded product.

The terminal group of the polyamide takes part in the reaction with polyphenylene ether.

A polyamide typically has an amino group or a carboxyl group as a terminal group. Generally, a higher concentration of the terminal carboxyl group reduces the impact resistance and enhances the flowability. Conversely, a higher concentration of the terminal amino group enhances the impact resistance and reduces the flowability.

According to the present invention, the concentration ratio of the terminal amino group of the polyamide to the terminal carboxyl group thereof is preferably 1.0 or less, more preferably 0.05 to 0.8. The range enables the maintenance of the balance between the flowability and impact resistance of the composition.

The terminal amino group concentration is preferably from 1 to 80 μmol/g, more preferably from 5 to 60 μmol/g, still more preferably from 10 μmol/g (inclusive) to 45 μmol/g (inclusive), most preferably from 20 μmol/g (inclusive) to 40 μmol/g (inclusive). Setting the terminal amino group concentration to within the above range enables the maintenance of the balance between the flowability and impact resistance of the composition.

The terminal carboxyl group concentration is preferably from 20 μmol/g to 150 μmol/g, more preferably from 30 μmol/g to 130 μmol/g. Setting the terminal carboxyl group concentration to within the above range enables the maintenance of the balance between the flowability and impact resistance of the composition.

A known method may be used to control the terminal group identity of the polyamide resin. One exemplary method involves adding at least one selected from the group consisting of a diamine compound, a monoamine compound, a dicarboxylic acid compound, a monocarboxylic acid compound, and the like so as to provide predetermined terminal group concentrations during polymerization to the polyamide resin.

As used herein, the concentrations of the terminal amino group and terminal carboxyl group can be measured by various methods; however, it is preferred in view of accuracy and simplicity to determine them from the integrated values of characteristic signals corresponding to the terminal residues using $^1$H-NMR. For example, the specific method for quantitatively determining the terminal group concentrations of the semiaromatic polyamide is recommended to be according to a method as described in Examples of JP-A-07-228689.

When the semiaromatic polyamide is used as the polyamide of the present invention, 10 to 95% of the terminal groups of the molecular chains thereof are preferably blocked with terminal-blocking agents. The ratio at which the terminal groups of the molecular chains are blocked with blocking agents (terminal blocking ratio) more preferably has a lower limit of 40%, still more preferably 60%. Setting the terminal blocking ratio to 10% or more can reduce a change in the viscosity of the resin composition according to the present invention during melt-molding, which is preferable because effects are obtained such as excellence in physical properties including the appearance of the resulting molded product and thermal stability during processing. The upper limit of the terminal blocking ratio is preferably 95%, more preferably 90%. Setting the upper limit to 95% or less is preferable because effects are obtained such as the excellent impact resistance of the composition and the excellent surface appearance of the molded product.

The terminal blocking ratio of the semiaromatic polyamide of the present invention can be determined by measuring the number of each of the terminal carboxyl group and terminal amino group present in the polyamide resin and the number of the terminal groups blocked with terminal blocking agents and calculating the ratio therefrom according to the following equation (1):

$$\text{Terminal blocking ratio (\%)} = [(\alpha-\beta)/\alpha] \times 100 \qquad (1)$$

wherein α represents the total number of the terminal groups of the molecular chains (which is typically equal to two times the number of the polyamide molecules); and β represents the total number of the carboxyl group terminals and amino group terminals left without being blocked.

The terminal blocking agent is not particularly limited provided that it is a monofunctional compound having reactivity with the amino group or carboxyl group of the polyamide resin terminal. However, it is preferably a monocarboxylic acid or a monoamine in view of reactivity, stability of the blocked terminal, and the like and more preferably a monocarboxylic acid in view of ease of handling and the like. In addition, an acid anhydride, a monoisocyanate, a monacid halide, a monoester, a monoalcohol, or the like may be used as the terminal blocking agent.

The monocarboxylic acid used as the terminal blocking agent is not particularly limited provided that it has reactivity with an amino group. Examples thereof can include an aliphatic monocarboxylic acid such as acetic acid, propionic acid, butyric acid, valeric acid, caproic acid, caprylic acid, lauric acid, tridecanoic acid, myristic acid, palmitic acid, stearic acid, pivalic acid, and isobutyric acid; an alicyclic monocarboxylic acid such as cyclohexanecarboxylic acid; an aromatic monocarboxylic acid such as benzoic acid, toluic acid, α-naphthalenecarboxylic acid, β-naphthalenecarboxylic acid, methylnaphthalenecarboxylic acid, and phenylacetic acid; and any mixture thereof. Among these, preferred are acetic acid, propionic acid, butyric acid, valeric acid, caproic acid, caprylic acid, lauric acid, tridecanoic acid, myristic acid, palmitic acid, stearic acid, and benzoic acid, particularly preferably acetic acid and benzoic acid in view of reactivity, stability of the blocked terminal, price, and the like.

The monoamine used as the terminal blocking agent is not particularly limited provided that it has reactivity with a carboxyl group. Examples thereof can include an aliphatic monoamine such as methylamine, ethylamine, propylamine, butylamine, hexylamine, octylamine, decylamine, stearylamine, dimethylamine, diethylamine, dipropylamine, and dibutylamine; an alicyclic monoamine such as cyclohexylamine and dicyclohexylamine; an aromatic monoamine

such as aniline, toluidine, diphenylamine, and naphthylamine; and any mixture thereof. Among these, preferred are butylamine, hexylamine, octylamine, decylamine, stearylamine, cyclohexylamine, and aniline, particularly preferably butylamine, hexylamine, and octylamine in view of reactivity, boiling point, stability of the blocked terminal, price, and the like.

According to the present invention, a transition metal and/or a halogen may also be present in the resin composition for the purpose of further improving the thermal stability imparted to the resin composition by the polyamide resin.

The type of the transition metal is not particularly limited; however, preferred are copper, cerium, nickel, and cobalt, particularly preferably copper. Among halogens, bromine or iodine can be preferably used.

The amount of the transition metal is preferably from 1 ppm (inclusive) to 200 ppm (exclusive), more preferably from 5 ppm (inclusive) to 100 ppm (exclusive), based on 100 % by weight of the whole resin composition. Similarly, the amount of the halogen is preferably from 500 ppm (inclusive) to 1,500 ppm (exclusive), more preferably from 700 ppm (inclusive) to 1,200 ppm (exclusive).

Methods for adding the transition metal and / or halogen to the resin composition include, for example, a method which involves adding in the form of a powder when melt-kneading the polamide / polyphenylene composition, a method which involves adding during polymerization to the polyamide, and a method which involves preparing master pellets in which the metal and / or halogen is added at a high concentration to the polyamide, followed by adding the master pellets to the resin composition; any of the methods may be used. Among these methods, preferred is the method involving adding during polymerization to the polyamide or the method involving preparing master pellets in which the metal and / or halogen is added at a high concentration to the polyamide, followed by the addition thereof

According to the present invention, a known organic stabilizer can also be satisfactorily used in addition to the above transition metal and / or halogen. Examples of the organic stabilizer may include a hindered phenol antioxidant typified by Irganox 1098 (manufactured by Ciba Specialty Chemicals Inc.) or the like, a phosphorus-type processing heat stabilizer typified by Irganox 168 (manufactured by Ciba Specialty Chemicals Inc.) or the like, a lactone-type processing heat stabilizer typified by HP-136 (manufactured by Ciba Specialty Chemicals Inc.), a sulfur-type thermal stabilizer, and a hindered amine light stabilizer. Among these organic stabilizers, more preferred is a hindered phenol antioxidant, a phosphorus-type processing heat stabilizer, or a combination thereof. The blending amount of the organic stabilizer is preferably from 0.001 to 1 part by weight based on 100 parts by mass of the polyamide.

Further, in addition to the above, known additives or the like capable of being added to a polyamide may be added in an amount of less than 10 parts by mass based on 100 parts by mass of the polyamide.

The polyphenylene ether usable in the present invention is a homopolymer and/or copolymer comprising structural units of the following formula (1).

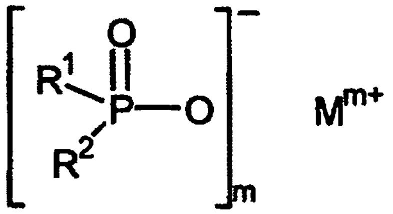

(I)

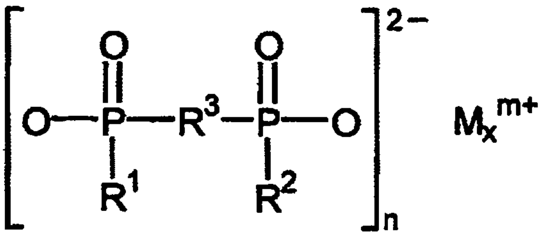

(II)

wherein O represents an oxygen atom; and R's each independently represent hydrogen, halogen, primary or secondary lower alkyl, phenyl, haloalkyl, aminoalkyl, hydrocarbonoxy, or halohydrocarbonoxy (wherein at least two carbon atoms separate the halogen atom and the oxygen atom).

Specific examples of the polyphenylene ether of the present invention may include poly(2,6-dimethyl-1,4-phenylene ether), poly(2-methyl-6-ethyl-1,4-phenylene ether), poly(2-methyl-6-phenyl-1,4-phenylene ether), and poly(2,6-dichloro-1,4-phenylene ether). In addition, examples thereof may include a polyphenylene ether copolymer such as a copolymer of 2,6-dimethylphenol with another phenol (for example, a copolymer thereof with 2,3,6-trimethylphenol or a copolymer thereof with 2-methyl-6-butylphenol as described in Japanese Patent Publication No. 52-17880)

Among these polyphenylene ethers, particularly preferred is poly(2,6-dimethyl-1,4-phenylene ether), a copolymer of 2,6-dimethylphenol with 2,3,6-trimethylphenol, or a mixture thereof.

A process for producing the polyphenylene ether used in the present invention is not particularly limited provided that it is a known process. Examples thereof may include production processes as described in U.S. Patent Nos. 3306874, 3306875, 3257357 and 3257358 specifications, JP-A-50-51197, and JP-B-52-17880 and 63-152628.

The polyphenylene ether of the present invention preferably has a reduced viscosity (as measured at 30°C in a 0.5 g / dl chloroform solution using an Ubbelohde viscosity tube) ranging from 0.30 dl / g to 0.80 dl / g, more preferably from 0.35 dl / g to 0.75 dl / g, most preferably from 0.38 dl / g to 0.55 dl / g. The reduced viscosity of the polyphenylene ether being within the range is preferable because it provides a composition excellent in characteristics such as impact resistance and heat resistance.

According to the present invention, a blend of two or more polyphenylene ethers having different reduced viscosities may be preferably used.

The polyphenylene ether usable in the present invention may be a wholly or partly modified polyphenylene ether. As used herein, the modified polyphenylene ether refers to a polyphenylene ether modified with at least one modifying compound having at least one carbon-carbon double bond or triple bond and at least one carboxylic acid group, acid anhydride group, amino group, hydroxyl group or glycidyl group in the molecular structure. The use of the modified polyphenylene ether is preferable because it can improve characteristics such as impact resistance and tensile strength.

Processes for producing the modified polyphenylene ether may include, in the presence or absence of a radical initiator, (1) a process involving reacting a polyphenylene ether with a modifying compound without melting the polyphenylene ether in the temperature range from 100°C (inclusive) to its transition temperature (exclusive), (2) a process involving melt-kneading a polyphenylene ether with a modifying compound in the temperature range from the transition temperature of the polyphenylene ether (inclusive) to 360°C (inclusive), and (3) a process involving reacting a polyphenylene ether with a modifying compound in a solution in a temperature of less than the transition temperature of the polyphenylene ether. Any of the processes may be used; however, the process (1) or (2) is preferable.

The at least one modifying compound having at least one carbon-carbon double bond or triple bond and at least one carboxylic acid group, acid anhydride group, amino group, hydroxyl group or glycidyl group in the molecular structure will now be specifically described.

Examples of the modifying compound simultaneously having a carbon-carbon double bond and a carboxylic acid group or an acid anhydride group in the molecule may include maleic acid, fumaric acid, chloromaleic acid, cis-4-cyclohexene-1,2-dicarboxylic acid, and acid anhydrides thereof. Among these, preferred are fumaric acid, maleic acid, and maleic anhydride, particularly preferably fumaric acid and maleic anhydride. These unsaturated dicarboxylic acids in each of which one or two of the two carboxyl groups are esterified can also be used.

Examples of the modifying compound simultaneously having a carbon-carbon double bond and a glycidyl group in the molecule may include allyl glycidyl ether, glycidyl acrylate, glycidyl methacrylate, and epoxidized natural fat and oil. Among these, particularly preferred are glycidyl acrylate and glycidyl methacrylate.

Examples of the modifying compound simultaneously having a carbon-carbon double bond and a hydroxyl group in the molecule may include an unsaturated alcohol of the general formula: $C_nH_{2n-3}OH$ (wherein n represents a positive integer) such as allyl alcohol, 4-penten-1-ol, and 1,4-pentadien-3-ol, and an unsaturated alcohol such as alcohols of the general formulas: $C_nH_{2n-5}OH$ and $C_nH_{2n-7}OH$ (wherein n represents a positive integer).

The above modifying compounds may be used alone or in a combination of two or more thereof

The addition amount of the modifying compound in producing the modified polyphenylene ether is preferably from 0.1 to 10 parts by mass, more preferably from 0.3 to 5 parts by mass based on 100 parts by mass of the polyphenylene ether.

The amount of the radical initiator in producing the modified polyphenylene ether using the initiator is preferably from 0.001 to 1 part by weight based on 100 parts by mass of the polyphenylene ether.

The addition rate of the modifying compound to the modified polyphenylene ether is preferably from 0.01 to 5 % by weight, more preferably from 0.1 to 3 % by weight.

The unreacted modifying compound and / or a polymer of the compound may remain in an amount of less than 1 part by weight in the modified polyphenylene ether.

According to the present invention, a styrene-based thermoplastic resin may be blended in an amount of less than 50 parts by mass based on 100 parts by mass of the total of the polyamide and polyphenylene ether.

Examples of the styrene-based thermoplastic resin as used herein may include homostyrene, rubber-modified polystyrene (HIPS), styrene-acrylonitrile copolymer (AS resin), and styrene-rubbery polymer-acrylonitrile copolymer (ABS resin).

Various known stabilizers can be suitably used to stabilize the polyphenylene ether. Examples of the stabilizer include a metal stabilizer such as zinc oxide and zinc sulfide and an organic stabilizer such as a hindered phenol stabilizer, a phosphorus stabilizer, and a hindered amine stabilizer. The blending amount of the stabilizer is preferably less than 5 parts by mass based on 100 parts by mass of the polyphenylene ether.

In addition, known additives or the like capable of being added to the polyphenylene ether may be added in an amount of less than 10 parts by mass based on 100 parts by mass of the polyphenylene ether.

According to the present invention, the polyamide (A) and the polyphenylene ether (B) are preferably used in respective ranges of from 40 to 70 parts by mass and from 60 to 30 parts by mass when the combined weight thereof makes up 100 parts. The respective ranges are more preferably from 50 to 70 parts by mass of the polyamide (A) and from 50 to 30 parts by mass of the polyphenylene ether (B), most preferably from 50 to 60 parts by mass of the polyamide (A) and from 50 to 40 parts by mass of the polyphenylene ether (B). These relative weight ranges are preferable because they provide a composition excellent in resistance to chemicals such as an aromatic hydrocarbon and heat resistance.

According to the present invention, the polyphenylene ether preferably has a dispersed form in which the polyamide forms a continuous phase with the polyphenylene ether forming a disperse phase. Particularly when the polyphenylene ether observed under a transmission electron microscope, it is preferred for the particulate polyphenylene ether to be present as a disperse phase having an average particle diameter of from 0.1 to 5 μm, more preferably from 0.05 to 3 μm, most preferably from 0.1 to 2 μm.

The at least one phosphinate selected from the group consisting of phosphinate represented by formula (I) below and / or diphosphinate represented by formula (II) below, and condensation products thereof as the component (C) is produced in an aqueous solution using a phosphinic acid and a metal carbonate, a metal hydroxide, or a metal oxide as described in JP-A-2005-179362, EP 699708 A1, and JP-A-08-73720. These phosphinates are essentially monomeric compounds, but also include a polymeric phosphinate which is a condensation product having a condensation degree of from 1 to 3 under some environments depending on the reaction conditions.

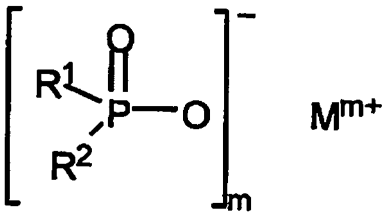 (I)

wherein $R^1$ and $R^2$ are the same or different and each represent straight-chain or branched $C_1$ to $C_6$ alkyl and / or aryl, or phenyl; $R^3$ represents straight-chain or branched $C_1$ to $C_{10}$ alkylene, $C_6$ to $C_{10}$ arylene, $C_6$ to $C_{10}$ alkylarylene, or $C_6$ to $C_{10}$ arylalkylene; M represents at least one selected from the group consisting of calcium (ion), magnesium (ion), aluminium (ion), zinc (ion), bismuth (ion), manganese (ion), sodium (ion), potassium (ion), and a protonated nitrogenous base; m represents 2 or 3; n represents 1 to 3; and x represents 1 or 2.

The phosphinate of the present invention may be mixed in any composition provided that the composition is in the range not impairing the advantages of the present invention. However, phosphinate represented by the above (I) is preferably contained in an amount of 90 % by weight or more, more preferably 95 % by weight or more, most preferably 98 % by weight or more in view of flame retardancy and reduction of mold deposits.

Specific examples of phosphinic acids preferably usable in the present invention may include dimethylphosphinic acid, ethylmethylphosphinic acid, diethylphosphinic acid, methyl-n-propylphosphinic acid, methanedi(methylphosphinic acid), benzene-1,4-(dimethylphosphinic acid), methylphenylphosphinic acid, diphenylphosphinic acid, and mixtures thereof.

The metal component preferably uses at least one selected from the group consisting of calcium (ion), magnesium (ion), aluminium (ion), zinc (ion), bismuth (ion), manganese (ion), sodium (ion), potassium (ion), and a protonated nitrogenous base. More preferred is at least one selected from the group consisting of calcium (ion), magnesium (ion), aluminium (ion), and zinc (ion).

Specific examples of preferably usable phosphinates may include calcium dimethylphosphinate, magnesium dimethylphosphinate, aluminium dimethylphosphinate, zinc dimethylphosphinate, calcium ethylmethylphosphinate, magnesium ethylmethylphosphinate, aluminium ethylmethylphosphinate, zinc ethylmethylphosphinate, calcium diethylphosphinate, magnesium diethylphosphinate, aluminium diethylphosphinate, zinc diethylphosphinate, calcium methyl-n-propylphosphinate, magnesium methyl-n-propylphosphinate, aluminium methyl-n-propylphosphinate, zinc methyl-n-propylphosphinate, calcium methanedi(methylphosphinate), magnesium methanedi(methylphosphinate), aluminium methanedi(methylphosphinate), zinc methanedi(methylphosphinate), calcium benzene-1,4-(dimethylphosphinate),

magnesium benzene-1,4-(dimethylphosphinate), aluminium benzene-1,4-(dimethylphosphinate), zinc benzene-1,4-(dimethylphosphinate), calcium methylphenylphosphinate, magnesium methylphenylphosphinate, aluminium methylphenylphosphinate, zinc methylphenylphosphinate, calcium diphenylphosphinate, magnesium diphenylphosphinate, aluminium diphenylphosphinate, and zinc diphenylphosphinate.

Particularly in view of flame retardancy and reduction of mold deposits, preferred are calcium dimethylphosphinate, aluminium dimethylphosphinate, zinc dimethylphosphinate, calcium ethylmethylphosphinate, aluminium ethylmethylphosphinate, zinc ethylmethylphosphinate, calcium diethylphosphinate, aluminium diethylphosphinate, and zinc diethylphosphinate. Among others, aluminium diethylphosphinate is particularly preferable.

According to the present invention, the amount of the phosphinate is preferably from 1 to 50 parts by mass, based on 100 parts by mass of the total of the polyamide (A) and polyphenylene ether (B). More preferred is from 2 to 25 parts by mass, particularly preferably from 2 to 15 parts by mass, most preferably from 2 to 10 parts by mass. Setting the amount of the phosphinate to 1 part by weight or more enables flame retardancy to be sufficiently exerted. Setting the amount of the phosphinate to 50 parts by mass or less is preferable because it can make the melt viscosity suitable for extruding.

The lower limit of the average particle diameter of the phosphinate is preferably 0.5 μm considering the mechanical strength and appearance of a molded product obtained by molding the resin composition of the present invention. The lower limit is more preferably 1.0 μm, most preferably 2 μm. The upper limit of the average particle diameter of the phosphinate is preferably 40 μm, more preferably 20 μm, still more preferably 15 μm, most preferably 10 μm.

The phosphinate particles having a number average particle diameter of 0.5 μm or more are preferable because they are easier to handle and penetrate into an extruder or the like during processing such as melt-kneading. Setting the average particle diameter to 40 μm or less facilitates the exertion of the mechanical strength of the resin composition and improves the surface appearance of a molded product thereof

The average particle diameter of the phosphinate can be measured and analyzed by using a laser diffraction particle size distribution analyzer (e.g., SALD-2000 (trade name) manufactured by Shimadzu Corporation) and dispersing the phosphinate in water. A method for dispersing the phosphinate in water can be carried out by adding water and the phosphinate to a stirring tank equipped with an ultrasonic diffuser and / or a stirrer. The dispersion is fed to a measurement cell in the laser diffraction particle size distribution analyzer through a pump to measure the particle diameter by laser diffraction. The average particle diameter can be calculated as a number average particle diameter from the frequency distribution of the particle diameter and the number of particles obtained by the measurement.

In the phosphinate of the present invention, the unreacted material or by-products may remain provided that they do not impair the advantages of the present invention.

In the resin composition according to the present invention, the phosphinate has a state dispersed in the polyamide and / or polyphenylene ether. In addition, when the resin composition was observed for the continuous 3-$mm^2$ surface of the section thereof using a light microscope, the number of phosphinate particles having a major diameter of 30 μm or more is preferably 50 or less, more preferably 30 or less. There is particularly no lower limit thereto; however, the lower limit is 1 since the presence of about one particle is no problem.
Fifty particles or less of the phosphinate under the above conditions improves the mechanical strength (particularly, tensile elongation and surface impact strength) of the resin composition and the appearance of a molded piece thereof.

A specific method for identifying a dispersed state of the phosphinate in the resin composition according to the present invention uses the following method. The resin composition is first cut in a mirror surface form using a microtome equipped with a glass knife. The cut surface is observed by reflected light at 100 x magnification under a light microscope (PME3 manufactured by Olympus Corporation) to photograph the area of at least 3 $mm^2$. The dispersed state of the phosphinate can be identified by visually counting dispersed particles of the phosphinate having a major diameter of 30 μm or more present in the area of 3 $mm^2$. With reference to the direction of observation, when the object of observation has a cylindrical pellet shape, it is desirable to observe the pellets by cutting it into sections nearly perpendicular to the long side of the pellets. When the object is a molded piece, it is desirable to observe the numbers of the dispersed particles for the area of 3 $mm^2$ of each of at least 3 different regions of the test piece to present the observations as an average thereof

Various methods exist to control the number of the phosphinate particles having a main diameter of 30 μm or more in the resin composition to 50 or less. Examples thereof may include a method which involves preliminarily sizing the phosphinate using a sieve or the like to remove lumps of large particles and a method which involves pulverizing the phosphinate by mechanical shear using the step of melt-kneading together with the component (A) to make a master batch. However, preferred is the method involving the pulverization in the master batch step from an economic viewpoint.

The amount of the component (C) in the master batch containing the components (A) and (C) is preferably in the range of from 30 to 70 % by weight, more preferably from 35 to 65 % by weight, most preferably from 40 to 60 % by weight based on 100 % by weight of the master batch.

According to the present invention, the phosphinate as component (C) is particularly preferably used alone because mold deposits are reduced during injection molding. However, it is not intended to limit the use thereof in the

form of a flame retardant combination as described in International Patent Publication WO 2005/118698 pamphlet to such an extent that the advantages of the present invention are not impaired. Components capable of being a constituent of the flame retardant combination can include an adduct formed from melamine and a phosphoric acid and a zinc-containing compound.

Specific examples of the adduct formed from melamine and a phosphoric acid may include at least one selected from the group consisting of a reaction product of melamine and polyphosphric acid and / or a reaction product of a condensate of melamine and polyphosphoric acid, a nitrogenous phosphate represented by the formula: $(NH_4)_yH_{3-y}PO_4$ or $(NH_4PO_3)_z$ (wherein y represents 1 to 3; and z represents 1 to 10,000), ammonium hydrogenphosphate, ammonium dihydrogenphosphate, and/or ammonium polyphosphate. Particularly, an adduct represented by the chemical formula: $(C_3H_6N_6 \cdot HPO_3)_n$ (wherein n represents the degree of condensation) can be used which is obtained from a substantially equimolar reaction product of melamine and phosphoric acid, pyrophosphoric acid or polyphosphric acid. More specific examples thereof may include at least one selected from the group consisting of dimelamine pyrophosphate, melamine polyphosphate, melem polyphosphate, melam polyphosphate, mellon polyphosphate, and mixed poly salts thereof. Among others, the melamine polyphosphate is most frequently used.

The process for producing each of these adducts is not particularly limited. One example for the melamine polyphosphate may include a process which involves heat-condensing melamine phosphate under a nitrogen atmosphere.

Specific examples of the phosphoric acid being a constituent of the melamine phosphate here may include orthophosphoric acid, phosphorous acid, hypophosphorous acid, metaphosphoric acid, pyrophosphoric acid, triphosphoric acid, and tetraphosphoric acid. Particularly, melamine polyphosphate is frequently used in which an adduct of melamine using orthophosphoric acid or pyrophosphoric acid is condensed.

Examples of the melamine polyphosphate may include an equimolar addition salt of melamine with a linear polyphosphoric acid or a cyclic polymetaphosphoric acid which is called a condensed phosphoric acid. The condensation degree (n) of these polyphosphoric acids is not particularly limited, and is typically from 3 to 50; however, those having a condensation degree (n) of 5 or more are common.

Processes for producing the melamine polyphosphate addition salt may include, for example, a process which involves making a slurry in which a mixture of melamine and a polyphosphoric acid is dispersed in water, well mixing the slurry to form the reaction product of both the compounds into a fine particle shape, filtering, washing, drying, and further, if necessary, baking the slurry, and pulverizing the resultant solid matter to provide a powder. These are preferably preblended before being blended in the resin. By way of example, there are used those which are preblended employing a high-speed mixer.

The addition amount of the adduct formed from melamine and a phosphoric acid is preferably 20 parts by mass or less based on 100 parts by mass of the component (C). The addition amount is more preferably 10 parts by mass or less, still more preferably 5 parts by mass or less; most preferably, the adduct is substantially not contained. The addition of the adduct formed from melamine and a phosphoric acid in the above range can be expected to have the effect of slightly improving the flowability. However, to reduce mold deposits it is desirable that the adduct formed from melamine and a phosphoric acid be substantially not contained.

The adduct formed from melamine and a phosphoric acid usable in the present invention has an average particle diameter of from 0.5 $\mu$m (inclusive) to 40 $\mu$m (inclusive). When the adduct is used in the present invention, a fine powder thereof can be selected which has an average particle diameter of from 0.5 $\mu$m (inclusive) to 20 $\mu$m (inclusive).

In the adduct formed from melamine and a phosphoric acid, the unreacted materials or by-products may remain provided that they do not impair the advantages of the present invention.

The zinc-containing compound which is another component capable of being a constituent of the flame retardant combination specifically refers to an inorganic zinc-containing compound, and more specifically refers to at least one selected from the group consisting of zinc oxide, zinc sulfide, zinc borate, and zinc stannate. Most frequently used is a zinc oxide represented by $xZnO \cdot yB_2O_3 \cdot zH_2O$ (wherein x>0, y>0, and z>0). Common are the zinc borates represented by $2ZnO \cdot 3B_2O_3 \cdot 3.5H_2O$ and $4ZnO \cdot B_2O_3.H_2O$, and $2ZnO \cdot 3B_2O_3$.

These zinc-containing compounds are each considered to serve to form an incombustible layer (or a char layer) necessary to enhance flame resistance by keeping out heat transferring from flame as a heat source to a resin during burning (exhibiting the ability to insulate heat) as a flame retardant auxiliary to suppress the generation of gas serving as a fuel by resin decomposition.

Moreover, these zinc-containing compounds can be used by treatment with surface-treating agents such as a silane coupling agent and a titanate coupling agent.

The average particle diameter of the zinc-containing compound is typically 20 $\mu$m or less and is said to be preferably 7 $\mu$m or less in view of mechanical characteristics.

The addition amount of the zinc-containing compound is preferably 10 parts by mass or less based on 100 parts by mass of the component (C). The addition amount is more preferably 5 parts by mass or less, still more preferably 3 parts by mass or less; most preferably, the compound is substantially not contained. The addition of the zinc-containing

compound in the above range sometimes provides the effect of improving the stability of the component (C) at high temperature. To improve the mechanical characteristics while maintaining the flame retardancy, it is desirable that the zinc-containing compound be substantially not contained. A method for incorporating the above phosphinate (C), the adduct-form mixture of melamine and a phosphoric acid, and the zinc-containing compound into the present composition is not particularly limited. Examples of the method may include a method which involves adding each thereof alone to the composition and a method which involves preliminarily mixing two or three of these three components using a high-speed mixer (Henschel mixer) or the like, followed by adding the mixture to the composition.

The appearance-improving agent as the component (D) of the present invention will now be described. The appearance-improving agent as the component (D) refers to at least one selected from the group consisting of mineral oil and wax.

According to the present invention, the mineral oil refers to at least one selected from the group consisting of an aromatic compound, a naphthene ring compound, and a paraffin compound, and may be a mixture of the three compounds. When the mineral oil is a mixture, a paraffin and / or naphthene mineral oil mixture containing less than 30% of an aromatic compound can be preferably used in view of dispersibility and solubility in the impact modifier (E).

These mineral oils preferably have the properties of a kinematic viscosity of from 20 to 500 cst at 37.8°C, a pour point of from -10 to -15°C and a flash point of from 170 to 300°C.

Examples of the wax usable in the present invention may include a paraffin wax, a polyethylene wax, a polyolefin wax, a fatty acid ester, an aliphatic dibasic acid ester, a phthalic acid ester, and an aromatic carboxylic acid ester. Among others, the paraffin wax and polyethylene wax can be preferably used.
These components (D) may be used alone or in a combination of two or more thereof.

The usage amount of the component (D) is preferably 0.1 part by weight as a lower limit based on 100 parts by mass of the total of the polyamide (A) and polyphenylene ether (B) in view of the effect of improving the surface appearance and the prevention of bleeding-out thereof on the molded product surface. The lower limit is more preferably 0.2 part by weight. The upper limit of the usage amount is preferably 10 parts by mass, more preferably 5 parts by mass.

The component (D) of the present invention may be used in the form of a master batch preliminarily formed with at least one selected from the group consisting of the polyamide (A), polyphenylene ether (B) and impact modifier (E). Methods for preparing the master batch may include a method which involves the preblending thereof, a method which involves producing the batch by melt-kneading the preblend using a twin screw extruder or the like, and a method which involves subjecting the preblend to thermal equilibration treatment in an oven or the like. Preferred is the method involving subjecting the preblend to thermal equilibration treatment in an oven or the like. Here, the content of the appearance-improving agent in the master batch containing the agent is preferably from 1 to 50 parts by mass.

The impact modifier (E) of the present invention refers to a block copolymer comprising at least one polymer block composed mainly of an aromatic vinyl compound and at least one polymer block composed mainly of a conjugated diene compound, or a hydrogenated product thereof.

Specific non-limited examples of the aromatic vinyl compound being a constituent of the block copolymer may include styrene, α-methylstyrene, and vinyltoluene; particularly preferred is styrene. These aromatic vinyl compounds may be used in a combination of two or more thereof.

Specific non-limited examples of the conjugated diene compound being a constituent of the block copolymer may include butadiene, isoprene, piperylene, and 1,3-pentadiene; preferred is butadiene, isoprene, or a combination thereof. These conjugated diene compounds may be used in a combination of two or more thereof.

As used herein and in the appended claims, the term "composed mainly of" refers to containing in an amount of at least 50% and more preferably refers to containing in an amount of at least 70%.

When butadiene is used as a conjugated diene compound for the block copolymer, the microstructure of the polybutadiene block portion preferably has a total amount of 1,2-vinyl bond and 3,4-vinyl bond of from 5 to 80%, more preferably from 10 to 50%, most preferably from 15 to 40%. A 1,2-vinyl bond, 3,4-vinyl bond, or 1,4-vinyl bond is typically present as a bond form of a conjugated diene compound. However, as used herein, the term "amount of vinyl bond" indicates the proportion of a bond form of a conjugated diene compound in the polymerization thereof For example, the amount of 1,2-vinyl bond refers to the proportion of 1,2-vinyl bond in the above three bond forms, and can easily be known using an infrared spectrophotometer, a nuclear magnetic resonance apparatus, or the like.

According to the present invention, the block copolymer comprising at least one polymer block composed mainly of an aromatic vinyl compound and at least one polymer block composed mainly of a conjugated diene compound is preferably a block copolymer in which the polymer block composed mainly of an aromatic vinyl compound (S) and the polymer block composed mainly of a conjugated diene compound (B) are bound in a form selected from the group consisting of S-B type, S-B-S type, and S-B-S-B type. Among these, more preferred is S-B-S type or S-B-S-B type; and most preferred is S-B-S type. A mixture of these types may be selected, of course.

A hydrogenated block copolymer of an aromatic vinyl compound and a conjugated diene compound may also be used in the present invention. The hydrogenated block copolymer refers to a block copolymer obtained by subjecting, to hydrogenation reaction, aliphatic unsaturated double bonds in the above block copolymer of an aromatic vinyl compound and a conjugated diene compound. The proportion of aliphatic unsaturated double bonds converted to single bonds by hydrogenation reaction is expressed as a hydrogenation ratio. The hydrogenation ratio can be known using a nuclear magnetic resonance apparatus or the like. The hydrogenated block copolymer preferably has a hydrogenation ratio of 50% or more, more preferably 80% or more, most preferably 95% or more.

According to the present invention, the block copolymer (which may be hydrogenated) of an aromatic vinyl compound and a conjugated diene compound preferably has a number average molecular weight of 100,000 or more, more preferably 150,000 or more.

As used herein, the number average molecular weight refers to a number average molecular weight obtained by measurement with an ultraviolet spectrometer using a gel permeation chromatography measurement apparatus, followed by conversion to standard polystyrene. Here, a low molecular weight component due to catalyst inactivation during polymerization is sometimes detected, the low molecular weight component being then excluded from the calculation of the molecular weight. Typically, the distribution of molecular weight (weight average molecular weight/number average molecular weight) thus calculated is in the range from 1.0 to 1.1.

According to the present invention, one polymer block composed mainly of an aromatic vinyl compound preferably has a number average molecular weight of 15,000 or more, more preferably 30,000 or more. When one polymer block composed mainly of an aromatic vinyl compound has a number average molecular weight of 15,000 or more, the variation of impact resistance (surface impact strength) of the resin composition can be reduced.

The number average molecular weight of one polymer block composed mainly of an aromatic vinyl compound can be determined from the following equation using the number average molecular weight of the above block copolymer:

$$Mn\ (a) = (Mn \times a/(a+b))/N$$

wherein Mn (a) represents the number average molecular weight of the one polymer block composed mainly of an aromatic vinyl compound; Mn represents the number average molecular weight of the block copolymer comprising at least one polymer block composed mainly of an aromatic vinyl compound and at least one polymer block composed mainly of a conjugated diene compound; a represents the % by weight of all polymer blocks composed mainly of an aromatic vinyl compound; b represents the % by weight of all polymer blocks composed mainly of a conjugated diene compound; and N represents the number of polymer blocks composed mainly of an aromatic vinyl compound in the block copolymer.

These block copolymers usable in the present invention may be employed in a mixture of two or more thereof different in each of the following ways provided that the mixed use does not violate the spirit of the invention: the binding form; the aromatic vinyl compound species; the conjugated diene compound species; the content of 1,2-bond vinyl or the content of 1,2-bond vinyl and 3,4-bond vinyl; the aromatic vinyl compound component content; and the hydrogenation ratio.

These block copolymers used in the present invention may each be a copolymer which is wholly or partly modified.

As used herein, the modified block copolymer refers to a block copolymer modified with at least one modifying compound having at least one carbon-carbon double bond or triple bond and at least one carboxylic acid group, acid anhydride group, amino group, hydroxyl group or glycidyl group in the molecular structure.

Processes for producing the modified block copolymer may include, in the presence or absence of a radical initiator, (1) a process which involves melt-kneading and reacting the block copolymer with a modifying compound in the temperature range from the softening temperature of the block copolymer (inclusive) to 250°C (inclusive), (2) a process which involves reacting the block copolymer with a modifying compound in a solution at the softening temperature of the block copolymer or lower, and (3) a process which involves reacting the block copolymer with a modifying compound without melting at the softening temperature of the block copolymer or lower. Any of the processes may be used. However, the process (1) is preferable; further, the process (1) is most preferably carried out in the presence of a radical initiator.

As used herein, the at least one modifying compound having at least one carbon-carbon double bond or triple bond and at least one carboxylic acid group, acid anhydride group, amino group, hydroxyl group or glycidyl group in the molecular structure may use the same modifying compound as described in the modified polyphenylene ether.

According to the present invention, the amount of the impact modifier (E) is preferably from 5 to 25 parts by mass, more preferably from 7 to 15 parts by mass based on 100 parts by mass of the total of the polyamide and polyphenylene ether.

Examples of the inorganic filler as the component (F) of the present invention may include fibrous, granular, plate-like and needle-like reinforcement materials such as glass fiber, potassium titanate fiber, gypsum fiber, brass fiber, stainless fiber, steel fiber, ceramic fiber, boron whisker fiber, mica, talc, silica, calcium carbonate, kaolin, calcined kaolin, wollastonite, xonotlite, apatite, glass bead, glass flake, titanium oxide, and coloring carbon black. These inorganic fillers

may be used in a combination of two or more thereof Among these, preferred inorganic fillers include talc, wollastonite, and glass fiber. The organic filler may also use that surface-treated by a known method using a surface-treating agent such as a silane coupling agent.

According to the present invention, the amount of the inorganic filler is preferably from 1 to 70 % weight based on 100 % weight of the whole resin composition containing the inorganic filler. The amount is more preferably from 5 to 50 % by weight, most preferably from 10 to 45 % by weight.

According to the present invention, a compatibilizer is more preferably added in order to improve the compatibility between the polyamide and the polyphenylene ether. The main purpose of using the compatibilizer is to improve the physical properties of the polyamide-polyphenylene ether mixture.

The compatibilizer usable in the present invention is a polyfunctional compound capable of interacting with the polyphenylene ether, the polyamide, or both thereof. The interaction may be chemical (for example, grafting) or physical (for example, changing the surface characteristics of the disperse phase). In each case, the resulting polyamide-polyphenylene ether mixture has improved compatibility.

Examples of the compatibilizer usable in the present invention are described in detain in JP-A-08-048869 and 09-124926 and the like; these known compatibilizers may be all used and may also be employed in combination. Among these various compatibilizers, particularly preferred examples of compatibilizers may include at least one selected from the group consisting of citric acid, maleic acid, itaconic acid, and anhydrides thereof Among others, maleic anhydride and citric acid are most preferable.

According to the present invention, the amount of the compatibilizer is preferably from 0.01 to 20 parts by mass, more preferably from 0.1 to 10 parts by mass, still more preferably from 0.1 to 5 parts by mass based on 100 parts by mass of the mixture of the polyamide and polyphenylene ether.

In addition, various conductive fillers can each be used in the resin composition according to the present invention. Examples thereof may include conductive carbon black, carbon nanotube (carbon fibril), graphite, and carbon fiber. These may be used in a mixture of two or more thereof Among others, conductive carbon black and carbon nanotube (carbon fibril) can be suitably used.

The amount of the conductive filler when used is in the range of from 0.5 to 40 parts by mass based on 100 parts by mass of the total of the polyamide (A) and the polyphenylene ether (B). The amount is preferably from 1 to 20 parts by mass, more preferably from 1 to 10 parts by mass, most preferably from 1 to 6 parts by mass.

According to the present invention, a method for adding the conductive filler is not particularly limited; however, preferred methods include a method which involves adding the conductive filler in the form of a conductive master batch in which the filler is preliminarily melt-kneaded in the polyamide. Here, the amount of the conductive filler in the master batch is preferably approximately from 5 to 30 % by weight (based on 100 % by weight of the conductive master batch). When the conductive filler uses conductive carbon black, the amount thereof is more preferably from 5 to 15 % by weight, most preferably from 8 to 12 % by weight. When the conductive filler uses a conductive filler other than conductive carbon black, including carbon nanotube (carbon fibril), graphite, or carbon fiber, the amount thereof is preferably from 10 to 30 % by weight, most preferably from 15 to 25 % by weight.

A process for producing the conductive master batch is preferably a process which involves production using a twin screw extruder. A process is particularly preferable which involves adding the conductive filler to the molten polyamide, followed by further melt-molding.

The process for producing the conductive master batch is not particularly limited; however, examples thereof may include (1) a process which involves mixing a polyamide in an unmelted state and a conductive filler and then melt-kneading the mixture at a temperature making the resin temperature equal to or higher than the melting point of the polyamide, (2) a process which involves adding a conductive filler to a molten polyamide, followed by melt-kneading, (3) a process which involves mixing a portion of polyamide in an unmelted state and a conductive filler and supplying the resultant mixture into the other portion of polyamide in a molten state, followed by melt-kneading, and (4) a process which involves supplying a conductive filler into a portion of polyamide in a molten state, followed by melt-kneading, and further supplying the other portion of polyamide, followed by melt-kneading.

Among these, the most preferred aspect is the process (3) which involves preliminarily mixing a portion of polyamide in an unmelted state and a conductive filler and supplying the resultant mixture into the other portion of polyamide in a molten state, followed by melt-kneading. The preferred production process enables a significant reduction in resin temperature during the production of the conductive master batch, which is highly effective in reducing mold deposits after making the conductive resin composition.

The above production processes will be described with specific examples.

(1) A process which involves, using a twin screw extruder having one supply port in the upstream section, supplying a mixture of a polyamide and a conductive filler thereto through the supply port in the upstream section to melt-knead the mixture at a temperature equal to or higher than the melting point of the polyamide.

(2) A production process which involves, using a twin screw extruder having one supply port in the upstream section and one supply port in the downstream section, supplying a polyamide thereto through the supply port in the upstream section to melt-knead the polyamide at a temperature equal to or higher than the melting point of the polyamide and then adding a conductive filler through the supply port in the downstream section to further melt-knead the mixture.

(3) A production process which involves, using a twin screw extruder having one supply port in the upstream section and one supply port in the downstream section, supplying part of a polyamide thereto through the supply port in the upstream section to melt-knead the polyamide at a temperature equal to or higher than the melting point of the polyamide and then adding, through the supply port in the downstream section, a mixture in which the remaining polyamide and the conductive filler are mixed without melting to further melt-knead the resultant mixture.

(4) A process which involves, using a twin screw extruder having one supply port in each of the upstream, midstream and downstream sections, supplying a polyamide thereto through the supply port in the upstream section to melt-knead the polyamide at a temperature equal to or higher than the melting point of the polyamide, adding a conductive filler through the supply port in the midstream portion to further melt-knead the mixture, and adding the polyamide through the supply port in the downstream section to further melt-knead the resultant mixture.

Among these, a particularly preferred aspect is the production process (3).

The preset temperature of a cylinder in a processing machine in producing the master batch by each of the above processes is not particularly limited; there is no problem provided that it is a temperature equal to or higher than the melting point of the semiaromatic polyamide as described above. The temperature is preferably in the range from 290 to 350°C, more preferably in the range from 300 to 330°C.

The resin composition of the present invention may further contain a flame retardant other than the component (C). The flame retardant here is also more preferably an inorganic or organic flame retardant substantially not containing halogen.

According to the present invention, the term "substantially not containing halogen" refers to having a concentration of chlorine and iodine in the flame retardant of less than 2 % by weight, more preferably less than 1 % by weight, still more preferably less than 0.5 % by weight.

Examples of usable flame retardants may include a known inorganic flame retardant typified by magnesium hydroxide, aluminium hydroxide or the like; an organic phosphate typified by triphenyl phosphate, triphenyl phosphate hydroxide, bisphenol A bis(diphenyl phosphate), or the like; a nitrogenous phosphoric acid-based compound typified by ammonium polyphosphate; a phosphazene compound as described in JP-A-11-181429; a silicone oil; red phosphorus; and other known flame retardants.

According to the present invention, a fluoropolymer typified by tetrafluoroethylene or the like known as an anti-drip additive can also be used in an amount of less than 2 % by weight in the resin composition.

According to the present invention, in addition to the above-described components, other additive components may be added at any stage as needed in such a range that the advantages of the present invention are not impaired. Examples of other additive components may include a thermoplastic resin such as polyester and polyolefin; a plasticizer (low molecular weight polyolefin, polyethylene glycol, fatty acid ester, or the like); an antistatic agent; a nucleating agent; a flow improver; a filler; a reinforcing agent; any of various peroxides; a spreading agent; a copper-based heat stabilizer; an organic heat stabilizer typified by a hindered phenol oxidative degradation inhibitor; an antioxidant; an ultraviolet absorber; and a light stabilizer.

The specific addition amount of each of these components is preferably 10 % by weight or less, more preferably 5 % by weight or less, most preferably 3 % by weight or less in the resin composition.

Specific examples of the processing machine for obtaining the composition of the present invention may include a single screw extruder, a twin screw extruder, a roll, a kneader, a Brabender Plastograph, and a Banbury mixer. However, among others, a twin screw extruder is preferable. Particularly, a twin screw extruder is most preferable which has a supply port on the upstream side and at least one supply port on the downstream side.

Examples of the production process using at least polyamide (A), polyphenylene ether (B), and phosphinate (C) are as follows.

(1) A process which involves, using a twin screw extruder having one supply port on each of the upstream and downstream sides, supplying the polyphenylene ether and, as needed, an appearance improver, an impact modifier, and a compatibilizer thereto through the upstream supply port, followed by melt-kneading, and adding the polyamide and phosphinate and, as needed, an inorganic filler, a conductive filler and other additives thereto through the downstream supply port, followed by further melt-kneading.

(2) A process which involves, using a twin screw extruder having one supply port on each of the upstream and downstream sides, supplying the polyphenylene ether, the phosphinate and, as needed, an appearance improver, an impact modifier, and a compatibilizer thereto through the upstream supply port, followed by melt-kneading, and supplying the polyamide and, as needed, an inorganic filler and a conductive filler thereto through the downstream

supply port, followed by further melt-kneading.

(3) A process which involves, using a twin screw extruder having one supply port on the upstream side and two supply ports on the downstream side, supplying the polyphenylene ether and, as needed, an appearance improver, an impact modifier, and a compatibilizer thereto through the upstream supply port, followed by melt-kneading, supplying the polyamide thereto through the first downstream supply port (a downstream supply port lying more upstream), followed by melt-kneading, and supplying the phosphinate and, as needed, an inorganic filler and a conductive filler thereto through the second downstream supply port, followed by further melt-kneading.

(4) A process which involves, using a twin screw extruder having one supply port on each of the upstream and downstream sides, supplying a master batch containing at least the polyphenylene ether and an appearance-improving agent (a master batch composed of at least one selected from the group consisting of the polyamide, the polyphenylene ether and an impact modifier and the appearance-improving agent) and, as needed, the impact modifier, a compatibilizer and the like thereto through the upstream supply port, followed by melt-kneading, and supplying the polyamide and phosphinate and, as needed, an inorganic filler and a conductive filler thereto through the downstream supply port, followed by further melt-kneading.

(5) A process which involves, using a twin screw extruder having one supply port on the upstream side and two supply ports on the downstream side, supplying a master batch containing at least the polyphenylene ether and an appearance-improving agent (a master batch composed of at least one selected from the group consisting of the polyamide, the polyphenylene ether and an impact modifier and the appearance-improving agent) and, as needed, the impact modifier and a compatibilizer thereto through the upstream supply port, followed by melt-kneading, supplying the polyamide thereto through the first downstream supply port (a downstream supply port lying more upstream), followed by melt-kneading, and supplying the phosphinate and, as needed, an inorganic filler and a conductive filler thereto through the second downstream supply port, followed by further melt-kneading.

Among the above processes, preferred are processes (3), (4), and (5).

The melt-kneading temperature for obtaining the resin composition of the present invention is not particularly limited; however, a condition in which a suitable composition is obtained can be arbitrarily chosen typically from among 240 to 360°C considering the kneading state and the like.

The rotation speed of the extruder during processing is preferably from 150 to 800 rpm, more preferably from 250 to 700 rpm. It is desirable that the rotation speed be set at 150 rpm or more to increase the dispersibility of the phosphinate and 800 rpm or less to suppress the decomposition of the resin.

The composition according to the present invention thus obtained can be used in the form of molded articles for various components using previously known methods, for example, injection molding.

The resin composition according to the present invention is preferably a composition having an average flaming time of 25 seconds or less as measured by exposure in vertical positioning to test flame according to UL 94 using 1.6 mm-thick test pieces thereof since it can be suitably used in various applications. The composition more preferably has flame retardancy preventing the occurrence of cotton ignition by dripping according to the same measurement method, and most preferably has an average flaming time of 5 seconds or less.

The resin composition according to the present invention can be suitably used particularly in electric and electronic components and automobile electric and electronic components. The composition can be suitably used among others in a relay box material as one of automobile electric and electronic components and in an SMT-applicable component in the electrical and electronic field.

Examples

The present invention will now be described in further detail by way of Examples and Comparative Examples. However, the invention is not intended to be limited to these Examples.

Note that the raw materials and measurement methods used in Examples and Comparative Examples are described below.

Raw Materials

(A) Polyamide

(A-1) Polyamide 9T (hereinafter abbreviated as PA9T-a)

With reference to the method described in the Examples of JP-A-2000-204239, 3,256.2 g (19.6 mol) ofterephthalic acid, 2,690.9 g (17.0 mol) of 1,9-nonanediamine, 474.9 g (3.0 mol) of 2-methyl-1,8-octanediamine, 97.7 g (0.8 mol) of benzoic acid, 6.5 g (0.1 % by weight based on the total of the preceding four polyamide raw materials) of sodium

hypophosphite monohydrate, and 6 litters of distilled water were placed in an autoclave having an inner volume of 20 litters, whose inside was then purged with nitrogen. The autoclave was stirred at 100°C for 30 minutes, followed by raising the internal temperature thereof to 310°C over a period of 2 hours. At this time, the autoclave was pressurized to 22 kg / $cm^2$. This state was kept as it is for one hour, followed by heating up to 330°C. Then, the temperature was kept at 330°C for 2 hours, and the reaction was conducted while slowly purging water vapor to keep the pressure at 22 kg / $cm^2$. Subsequently, the pressure was lowered to 10 kg / $cm^2$ over a period of 30 minutes, followed by further carrying out the reaction for one hour to provide a prepolymer having a limiting viscosity [η] of 0.30 dl / g. The prepolymer was dried at a temperature of 100°C under a reduced pressure for 12 hours and pulverized to a size of 2 mm or less. This was subjected to solid phase polymerization for 10 hours under conditions of a temperature of 230°C and a pressure of 0.1 mmHg to provide a particulate polyamide polymer. The resultant particulate polymer was made into pellet form using a twin screw extruder set at a cylinder temperature of 330°C, and the pellets was called PA9T-a. When the resultant PA9T-a was analyzed, it had a melting point of 308°C, a viscosity number (as measured in the 96% sulfuric acid according to ISO 307 (1997)) of 100 ml / g, and a terminal amino group concentration of 40 μmol / g.
Note that the melting point was measured using a differential scanning calorimeter (Piris-1, manufactured by Perkin Elmer). The terminal blocking ratio and terminal group concentration were determined according to a method for measuring the terminal blocking ratio as described in the Examples of JP-A-07-228689.

(A-2) Polyamide 9T (hereinafter abbreviated as PA9T-b)

Polymerization was performed by the same method as in (1-1) except for changing the amount of terephthalic acid as a dicarboxylic acid component to 3,272.8 g (19.7 mol) and the amount of benzoic acid as a terminal blocking agent to 73.26 g (0.6 mol) to provide a particulate polyamide polymer. The resultant particulate polymer was processed and made into pellet form using a twin screw extruder set at a cylinder temperature of 330°C, and the pellets was called PA9T-b. When the resultant PA9T-b was analyzed in the same way as in (1-1), it had a melting point of 308°C, a viscosity number (as measured in the 96% sulfuric acid according to ISO 307 (1997)) of 140 ml / g, and a terminal amino group concentration of 10 μmol / g.

(A-3) Polyamide 9T (hereinafter abbreviated as PA9T-c)

Polymerization was performed by the same method as in (1-1) except for changing the amount of terephthalic acid as a dicarboxylic acid component to 3,222.9 g (19.4 mol) and the amount of benzoic acid as a terminal blocking agent to 146.55 g (1.2 mol) to provide a particulate polyamide polymer. The resultant particulate polymer was processed and made into pellet form using a twin screw extruder set at a cylinder temperature of 330°C, and the pellets was called PA9T-c. When the resultant PA9T-c was analyzed in the same way as in (1-1), it had a melting point of 308°C, a viscosity number (as measured in the 96% sulfuric acid according to ISO 307 (1997)) of 60 ml / g, and a terminal amino group concentration of 50 μmol / g.

(A-4) Polyamide 9T (hereinafter abbreviated as PA9T-d)

Polymerization was performed by the same method as in (1-1) except for changing the amount of benzoic acid as a terminal blocking agent to 109.9 g (0.9 mol) to provide a particulate polyamide polymer. The resultant particulate polymer was processed and made into pellet form using a twin screw extruder set at a cylinder temperature of 330°C, and the pellets was called PA9T-d. When the resultant PA9T-d was analyzed in the same way as in (1-1), it had a melting point of 308°C, a viscosity number (as measured in the 96% sulfuric acid according to ISO 307 (1997)) of 70 ml / g, and a terminal amino group concentration of 40 μmol / g.

(A-5) Polyamide 9T (hereinafter abbreviated as PA9T-e)

Polymerization was performed by the same method as in (1-1) except for changing the amount of benzoic acid as a terminal blocking agent to 42.7 g (0.35 mol) to provide a particulate polyamide polymer. The resultant particulate polymer was processed and made into pellet form using a twin screw extruder set at a cylinder temperature of 330°C, and the pellets was called PA9T-e. When the resultant PA9T-e was analyzed in the same way as in (1-1), it had a melting point of 309°C, a viscosity number (as measured in the 96% sulfuric acid according to ISO 307 (1997)) of 160 ml / g, and a terminal amino group concentration of 25 μmol / g.

(A-6) Polyamide 66 (hereinafter abbreviated as PA66-a)

In a 5-litter autoclave were charged 2,400 g of an equimolar salt of adipic acid with hexamethylenediamine,

100 g of adipic acid and 2.5 litters of pure water, which was then well stirred. The atmosphere in the autoclave was sufficiently purged with nitrogen, followed by heating up the mixture from room temperature to 220°C over a period of about one hour while stirring. Here, the gauge pressure in the autoclave became 1.76 MPa owing to natural pressure by water vapor. Subsequently, the pressure was lowered by heating and the opening and closing of a valve until the internal temperature and internal pressure reached 260°C and 0.2 MPa, respectively, over a period of about 30 minutes. Then, quenching was carried out to room temperature over a period of about one hour. After cooling, the autoclave was opened to remove and pulverize about 2 kg of a polymer. The resultant polyamide had a viscosity number (as measured in the 96% sulfuric acid according to ISO 307 (1997)) of 40 ml / g.

(A-7) Polyamide 66 (hereinafter abbreviated as PA66-b)

In a 5-litter autoclave were charged 2,400 g of an equimolar salt of adipic acid with hexamethylenediamine, 100 g of adipic acid and 2.5 litters of pure water, which was then well stirred. The atmosphere in the autoclave was sufficiently purged with nitrogen, followed by heating up the mixture from room temperature to 220°C over a period of about one hour while stirring. Here, the gauge pressure in the autoclave became 1.76 MPa owing to natural pressure by water vapor. Subsequently, heating was continued while removing water from the reaction system so that the gauge pressure did not become more than 1.76 MPa. Further, when the internal temperature reached 260°C after 2 hours, the internal pressure was lowered by opening the valve of the autoclave over a period of about 40 minutes while continuing the heating until the pressure became 0.2 MPa. Thereafter, cooling was carried out to room temperature over a period of about 8 hours. After cooling, the autoclave was opened to remove and pulverize about 2 kg of a polymer. The resultant polyamide had a viscosity number (as measured in the 96% sulfuric acid according to ISO 307 (1997)) of 110 ml / g.

(A-8) Polyamide 66 (hereinafter abbreviated as PA66-c)

The pulverized polymer obtained as PA66-a was subjected to solid phase polymerization for 2 hours under conditions of a temperature of 200°C and a pressure of 0.1 mmHg to produce polyamide 6,6 having a viscosity number (as measured in the 96% sulfuric acid according to ISO 307 (1997)) of 140 ml / g.

(A-9) Polyamide 66 (hereinafter abbreviated as PA66-d)

The pulverized polymer obtained as PA66-a was subjected to solid phase polymerization for 10 hours under conditions of a temperature of 200°C and a pressure of 0.1 mmHg to produce polyamide 6,6 having a viscosity number (as measured in the 96% sulfuric acid according to ISO 307 (1997)) of 260 ml / g.

(B) Polyphenylene Ether (hereinafter referred to as PPE)

Poly(2,6-dimethyl-1,4-phenylene ether) having a reduced viscosity of 0.52 dl/g (as measured at 30°C in a 0.5 g / dl chloroform solution) was used.

(C) Phosphinate

Aluminium diethylphosphinate (hereinafter abbreviated as DEP) was produced in reference to the production method described in the Examples of JP-A-2005-179362.
Lumps of DEP were wet pulverized in water and then sized to provide DEP's having the following average particle diameters.
(DEP-a) Aluminium diethylphosphinate
Average particle size = 3.1 μm
(DEP-b) Aluminium diethylphosphinate
Average particle size = 38 μm
(DEP-c) Aluminium diethylphosphinate
Average particle size = 45 μm
(D) Appearance-improving Agent (hereinafter referred to as PW)
A paraffin oil (Diana Process Oil PW380(trade name) manufactured by Idemitsu Kosan Co., Ltd.) was used.

(E) Impact modifier (hereinafter referred to as SEBS)

A copolymer composed of blocks of polystyrene, hydrogenated polybutadiene and polystyrene, which has the following physical properties, was used.

Number average molecular weight = 246,000
Number average molecular weight per polystyrene block = 40,600
Total content of styrene component = 33 % by weight
Amount of 1,2-vinyl bond = 33 % by weight
Hydrogenation ratio of polybutadiene moiety = 98% or more
The number average molecular weight of the block copolymer was calculated by measurement with an ultraviolet spectrometer (UV-41 manufactured by Showa Denko KK) using a gel permeation chromatography measurement apparatus (hereinafter simply abbreviated as GPC) (GPC SYSTEM21 manufactured by Showa Denko KK), followed by conversion to standard polystyrene.
(Solvent: chloroform, temperature: 40°C, column: sample side (K-G, K-800RL, K-800R), reference side (K-805L x 2), flow rate: 10 ml / min., measuring wave length: 254 nm, and pressure: 15 to 17 kg / $cm^2$)

(F) Inorganic Filler (hereinafter referred to as GF)

Chopped strand glass fiber (CS03MA FT2A (trade name) manufactured by Asahi Fiber Glass co., Ltd.) was used.

Compatibilizer (hereinafter referred to as MAH)

Maleic anhydride (Crystal MAN (trade name) manufactured by NOF Corporation) was used.
Nitrogenous flame retardant composed of an adduct formed from melamine and a phosphoric acid
Melamine polyphosphate (hereinafter referred to as MPP) (Melapur 200 / 70 (trade name) manufactured by Ciba Specialty Chemicals Inc.) was used.

Zinc-containing compound (hereinafter referred to as ZNB)

Zinc borate: $2ZnO·3B_2O_3·3.5H_2O$ (Firebrake ZB (trade name) manufactured by U.S. Borax Inc.) was used.

Preparation of a phosphinate master batch

The cylinder temperature of a twin screw extruder (ZSK-26MC manufactured by Coperion (Germany)) was set at 280°C which has one supply port on the upstream side and one supply port on the downstream side (one port at the position of 0.4 when the overall length of the extruder cylinder is set to 1.0: hereinafter abbreviated as a central supply port). PA66-c was supplied in an amount of 12 kg / h through the upstream supply port with DEP-a supplied in an amount of 12 kg / h through the central supply port, followed by melt-kneading to provide pellets. Here, the rotation speed of the screw was 400 rpm. When the molten resin temperature was measured, it was found to be 298°C. To control the moisture content of the pellets, after extrusion, the pellets were dried in a dehumidification drier set at 80°C and then placed in an aluminium-coated moisture-proof bag. The moisture content of the pellets here was approximately 800 ppm. The master batch obtained here is abbreviated as DEP-MB.

Preparation of an appearance-improving agent master batch

PW was mixed with SEBS at a rate of 55 parts by mass and 100 parts by mass to impregnate PW into SEBS. Subsequently, the mixture was placed in an oven at 50°C for 30 minutes to promote and equilibrate the impregnation of PW into SEBS to provide an appearance-improving agent master batch. This batch is hereinafter abbreviated as PW-SEBS.

Measuring method

(1) Flame retardancy (UL-94VB)

Five test pieces per sample were measured using the method of UL94 (a standard specified by Under Writers Laboratories Inc. USA). Each test piece (127 mm long, 12.7 mm wide and 1.6 mm thick) was molded using an injection molding machine (IS-80EPN manufactured by Toshiba Machine Co., Ltd.). The molding conditions were a cylinder temperature of 320°C and a mold temperature of 130°C when polyamide 9T was used, and a cylinder temperature of 290°C and a mold temperature of 80°C when polyamide 66 was used.
As a flame retardancy grade, the class of flame retardancy classified by the UL94 vertical flame test was given. In this regard, 5 test pieces were tested and determined for each sample.
An outline of the classification is as follows. Other details conform to the UL94 standard.

V-0: average flaming time: 5 seconds or less, maximum flaming time: 10 seconds or less, and cotton ignition: absent.
V-1: average flaming time: 25 seconds or less, maximum flaming time: 30 seconds or less, and cotton ignition: absent.
V-2: average flaming time: 25 seconds or less, maximum flaming time: 30 seconds or less, and cotton ignition: present.
Fail: a sample not falling into the above three ratings, or a sample for which even a clamp holding a test piece is burned.
The average flaming time (second) is the average of flaming times until extinguishment which are provided by two 10-second flame exposures for each sample, i.e., a total of ten such flame exposures. The maximum flaming time (second) indicates the flaming time until extinguishment of the sample which continues to flame longest, of the flaming times provided by a total of ten same flame exposures.
In the table, each flaming time after the ten flame exposures and the presence of dripping were also described.

(2) Amount of gas generation during processing

The amount of the gas generation was evaluated from the amount of silver streaks generated when a resin is allowed to reside in a molding machine, followed by performing the molding. Specifically, in molding a test piece for UL94VB, the molding machine motor is stopped in a state in which the resin is weighed (the cylinder heater maintains an on-state); the resin is allowed to reside in the cylinder for about 10 minutes; and a flat plate test piece (150 mm long, 150 mm wide and 2.5 mm thick) was then molded. After restarting the molding thereof, a 2nd shot test piece was collected and evaluated for the generation status of silver streaks being traces of gas running having appeared on the molding piece using the following indexes.

4 points: some silver streaks were generated only on the runner part.
3 points: silver streaks were generated on about 1 / 4 of the molded piece surface.
2 points: silver streaks were generated on about half of the molded piece surface.
1 point: silver streaks were generated on the whole surface of the molded piece.

(3) Surface appearance and mold deposits

The pelletized resin composition was molded using an injection molding machine (IS-80EPN manufactured by Toshiba Machine Co., Ltd.). The molding conditions were set to a cylinder temperature of 320°C and a mold temperature of 130°C when polyamide 9T was used and to a cylinder temperature of 290°C and a mold temperature of 80°C when polyamide 66 was used. A flat plate test piece of 50 x 90 x 2.5 mm was then molded at an injection time of 20 seconds and a cooling time of 30 seconds. The surface appearance of test pieces from the 10h to 20th shots of the molding was observed visually and evaluated based on the following criterion.
The above molding was also continued to evaluate the number of shots until mold deposits occurred and adhered to the mold. A higher number of shots until the generation of mold deposits indicates better performance.

Surface appearance evaluation

Good: No roughness or flow mark occurred on the test piece surface.
Moderate: Roughness and flow mark occurred on an area of less than 30% of the test piece surface.
Poor: Roughness and flow mark occurred on an area of 30% or more of the test piece surface.

(4) Thin-wall moldability

Pelletized resin composition was molded using a test piece mold (127 mm long and 12.7 mm wide) which provides a test piece having a thickness of 0.4 mm. The molding conditions were set to a cylinder temperature of 320°C and a mold temperature of 130°C when polyamide 9,T was used, and to a cylinder temperature of 290°C and a mold temperature of 80°C when polyamide 6,6 was used. The minimum injection pressure required for filling the mold (hereinafter abbreviated as SSP) was then measured. (Unit: MPa (gauge pressure))
A smaller necessary minimum injection pressure indicates better thin-wall moldability.

(5) Deflection temperature under load and Izod impact strength

The resultant pelletized resin composition was molded into rectangular molded pieces (128 mm long and 12.8 mm wide) having thicknesses of 6.4 mm and 3.2 mm as test pieces for deflection temperature under load and impact strength, respectively using an injection molding machine (IS-80EPN manufactured by Toshiba Machine Co., Ltd.). The cylinder temperature and mold temperature were set to 320°C and 140°C, respectively. The deflection temperature under a load of 0.45 MPa (low load HDT) was measured according to ASTM D648. The notched Izod impact strength

was measured under the condition of 23°C according to ASTM D256.

(6) Method for determine the dispersion state of a phosphinate

The pelletized resin composition was cut almost perpendicularly to the long side of the pellets so that the section was made in a mirror-surface form using a microtome equipped with a glass knife. The cut surface was observed by reflected light at 100 x magnification under a light microscope (PME3 manufactured by Olympus Corporation) to photograph the area of 3 $mm^2$. The dispersed particles of the phosphinate having a main diameter of 30 μm or more were visually counted.

Examples 1 to 13 and 16 to 18 and Comparative Examples 2 to 4

A twin screw extruder having one supply port on the upstream side and two supply ports on the downstream side (one port at the position of 0.4 and one port at the position of 0.8 when the overall length of the extruder cylinder was set to 1.0) (ZSK-26MC manufactured by Coperion Holding GmbH (Germany)) was provided. The cylinder temperature was set to 320°C from the supply port on the upstream side (hereinafter referred to as the upstream supply port) to the supply port at the position of L = 0.4 (hereinafter referred to as the central supply port) and, downstream to the central supply port, 310°C when polyamide 9T was used and 280°C when polyamide 66 was used.

According to the compositions described in Tables 1 to 4, raw materials for each thereof were supplied and melt-kneaded to provide pellets. To control the moisture content of the pellets, after extrusion, the pellets were dried in a dehumidification drier set at 80°C and then placed in an aluminium-coated moisture-proof bag. The moisture content of the pellets here was approximately from 300 to 400 ppm.

Here, the screw rotation speed of the extruder was set to 350 revolutions / minute and the discharge rate, to 12 kg / h. An aperture was provided in each of a block immediately preceding to a cylinder block having the central supply port and a cylinder block immediately preceding to a die; vacuum aspiration was performed therethrough to remove the remaining volatile matter and oligomers. The degree of vacuum (absolute pressure) here was 60 Torr.

Each of the above evaluations was performed using the resultant pellets.
The results are shown in Table 1.
Using the pelletized resin compositions of Examples 1 and 3, the number of phosphinate particles having a main diameter of 30 μm or more, which were present in the observation area of 3 $mm^2$, was determined. As a result, 5 particles were present for Example 1 and 3 particles, for Example 3.

Comparative Example 1

According to the composition described in Table 1, raw materials therefor were supplied under the same conditions as in Example 1. The resin discharged from the die had too low a melt viscosity, which did not enable the guiding of a strand to pellet cutter and thus the granulation after extrusion thereof.

Comparative Example 2

According to the composition described in Table 1, raw materials therefor were melt-kneaded under the same conditions as in Example 1 to provide pellets. The resultant pellet was attempted to be molded, but a molding tool could not completely be filled with the resin.

Example 14

According to the composition described in Table 3, raw materials therefor were melt-kneaded under the same conditions as in Example 1 to provide pellets. The resultant pellet was attempted to be molded, but a molding tool could not completely be filled with the resin under the condition of a cylinder temperature of 320°C. Accordingly, when the pellets was again attempted to be molded by raising the cylinder temperature to 330°C, the filling was completed. This obtained molded piece was subjected to the above evaluations.

Example 15

According to the composition described in Table 3, raw materials therefor were melt-kneaded under the same conditions as in Example 1 to provide pellets. The resultant pellet was attempted to be molded, but the filling with the resin could not completed under the condition of a cylinder temperature of 320°C. Accordingly, when the pellets was again attempted to be molded by raising the cylinder temperature to 330°C, the filling was completed. This obtained

molded piece was subjected to the above evaluations.

Example 19

According to the composition described in Table 4, raw materials therefor were melt-kneaded under the same conditions as in Example 1 to provide pellets. The resultant pellet was attempted to be molded, but the filling with the resin could not completed under the condition of a cylinder temperature of 320°C. Accordingly, when the pellets was again attempted to be molded by raising the cylinder temperature to 330°C, the filling was completed. This obtained molded piece was subjected to the above evaluations.

[Table 1]

| | | | Ex. 1 | Ex. 2 | Ex. 3 | Ex. 4 | Ex. 5 | Comp. Ex. 1 | Comp. Ex. 2 |
|---|---|---|---|---|---|---|---|---|---|
| PPE | Supplied through the upstream supply port | % by weight | 35.9 | 35.9 | 35.9 | 35.9 | 34.4 | 35.9 | 35.9 |
| SEBS | | | 9 | 9 | 9 | | 9 | 9 | 9 |
| MAH | | | 0.3 | 0.3 | 0.3 | 0.3 | 0.3 | 0.3 | 0.3 |
| PW-SEBS | | | | | | 9 | | | |
| PA66-a Viscosity number: 40 ml/g | Supplied through the first downstream supply port | | | | | | | 44.9 | |
| PA66-c Viscosity number: 110 ml/g | | | | | | | | | |
| PA66-d Viscosity number: 140 ml/g | | | 44.9 | 44.9 | 34.9 | 44.9 | 43.3 | | |
| PA66-e Viscosity number: 260 ml/g | | | | | | | | | 44.9 |
| DEP-a | Supplied through the second downstream supply port | | 9.9 | | | 9.9 | | 9.9 | 9.9 |
| DEP-b | | | | 9.9 | | | | | |
| DEP-c | | | | | | | 9.9 | | |
| DEP-MB | | | | | 19.9 | | | | |
| MPP | | | | | | | 2.5 | | |
| ZNB | | | | | | | 0.6 | | |
| Total | | | 100 | 100 | 100 | 100 | 100 | 100 | 100 |
| Average flaming time (1/16-inch thick test piece) | | Second | 4.8 | 4.8 | 4.3 | 4.1 | 6.2 | not extrudable | not moldable |
| Maximum flaming time | | Second | 9.4 | 9.8 | 6.2 | 7.2 | 14.9 | | |
| Presence of flaming drip | | Yes/No | No | No | No | No | No | | |
| UL94 determination | | - | V-0 | V-0 | V-0 | V-0 | V-1 | | |
| Amount of gas generation | | Point | 4 | 3 | 4 | 4 | 2 | | 2 |
| Surface appearance | | - | Good | Moderate | Good | Good | Moderate | | Moderate |
| Number of shots until generation of mold deposits sits | | | 900 | 800 | >1000 | >1000 | 30 | | 700 |

(continued)

| | | Ex. 1 | Ex. 2 | Ex. 3 | Ex. 4 | Ex. 5 | Comp. Ex. 1 | Comp. Ex. 2 |
|---|---|---|---|---|---|---|---|---|
| Thin-wall flowability (SSP in molding 1/64-inch rectangular piece) ch rectangular piece) | Mpa | 7.8 | 7.8 | 7.5 | 7.1 | 7.4 | not moldable | not moldable |

[Table 2]

| | | | Ex. 6 | Ex. 7 | Comp. Ex. 3 | Comp. Ex. 4 |
|---|---|---|---|---|---|---|
| PPE | Supplied through the upstream supply port | % by weight | 24.8 | 24.8 | 24.8 | 24.8 |
| SEBS | | | | | | |
| MAH | | | 0.2 | 0.2 | 0.2 | 0.2 |
| PW-SEBS | | | | | | |
| PA66-a Viscosity number: 40 ml/g | Supplied through the first downstream supply port | | | | 30 | |
| PA66-c Viscosity number: 110 ml/g | | | | 30.0 | | |
| PA66-d Viscosity number: 140 ml/g | | | 30.0 | | | |
| PA66-e Viscosity number: 260 ml/g | | | | | | 30 |
| DEP-a | Supplied through the second downstream supply port | | 15 | 15 | 15 | 15 |
| GF | | | 30 | 30 | 30 | 30 |
| Total | | | 100 | 100 | 100 | 100 |
| Average flaming time (1/16-inch thick test piece) | | Second | 4.7 | 4.6 | 8.8 | not moldable |
| Maximum flaming time | | Second | 8.8 | 8.5 | 13.2 | |
| Presence of flaming drip | | Yes/No | No | No | No | |
| UL94 determination | | - | V-0 | V-0 | V-1 | |
| Amount of gas generation | | Point | 4 | 4 | 2 | 3 |
| Surface appearance | | | Good | Good | Poor | Poor |
| Number of shots until generation of mold deposit: | | - | 600 | >1000 | 350 | 600 |
| Thin-wall flowability (SSP in molding 1/64-inch rectangular piece) rectangular piece) | | Mpa | 8.7 | 6.2 | 3.5 | not moldable |

[Table 3]

| | | | Ex. 8 | Ex. 9 | Ex. 10 | Ex. 11 | Ex. 12 | Ex. 13 | Ex. 14 | Ex. 15 |
|---|---|---|---|---|---|---|---|---|---|---|
| PPE | Supplied through he upstream supply port | % by weight | 38 | 38 | 38 | 38 | 35.7 | 38 | 38 | 35.7 |
| SEBS | | | 9 | 9 | 9 | | 9 | 9 | 9 | 9 |
| MAH | | | 0.4 | 0.4 | 0.4 | 0.4 | 0.3 | 0.4 | 0.4 | 0.3 |
| PW-SEBS | | | | | | 9 | | | | |
| PA9T-a Viscosity number: 100 ml/g | Supplied through he first downstream supply port | | 47.5 | | | | | | | |
| PA9T-b Viscosity number: 140 ml/g | | | | 47.5 | 47.5 | 47.5 | | 47.5 | | |
| PA9T-c Viscosity number: 60 ml/g | | | | | | | 45.0 | | | |
| PA9T-d Viscosity number: 70 ml/g | | | | | | | | | | |
| PA9T-e Viscosity number: 160 ml/g | | | | | | | | | 47.5 | 45.0 |
| DEP-a | Supplied through the second downstream supply port | | 5.1 | 5.1 | | 5.1 | 10 | | 5.1 | 10 |
| DEP-b | | | | | 5.1 | | | | | |
| DEP-c | | | | | | | | 5.1 | | |
| Total | | | 100 | 100 | 100 | 100 | 100 | 100 | 100 | 100 |
| Average flaming time (1/16-inch thick test piece) | | Second | 2.1 | 2.3 | 2.3 | 2.5 | 3.4 | 4.5 | 2.1 | (0.9) |
| Maximum flaming time | | Second | 3.9 | 7.4 | 7.4 | 3.4 | 10.7 | 15.6 | 3.3 | (2.2) |
| Presence of flaming drip | | Yes/No | No | No | No | No | No | No | No | (No) |
| UL94 determination | | - | V-0 | V-0 | V-0 | V-0 | V-1 | V-1 | V-0 | (V-0) |
| Amount of gas generation | | Point | 4 | 4 | 3 | 4 | 3 | 3 | 2 | 2 |
| Surface appearance | | | Good | Good | Moderate | Good | Good | Moderate | Moderate | Moderate |
| Number of shots until generation of mold deposits | | Shot | >1000 | 900 | 800 | >1000 | 400 | 750 | 400 | 300 |

(continued)

| | | Ex. 8 | Ex. 9 | Ex. 10 | Ex. 11 | Ex. 12 | Ex. 13 | Ex. 14 | Ex. 15 |
|---|---|---|---|---|---|---|---|---|---|
| Thin-wall flowability (SSP in molding 1/64-inch rectangular piece) inch rectangular | Mpa | 6 | 8.5 | 8.2 | 7.7 | 2.1 | 8.0 | (6.5) | (7.1) |
| Izod impact strength | J/m | 160 | 170 | 155 | 180 | 75 | 140 | 145 | 120 |

[Table 4]

| | | | Ex. 16 | Ex. 17 | Ex. 18 | Ex. 19 |
|---|---|---|---|---|---|---|
| PPE | Supplied through the upstream supply port | % by weight | 29.7 | 29.7 | 29.7 | 29.7 |
| SEBS | | | | | | |
| MAH | | | 0.3 | 0.3 | 0.3 | 0.3 |
| PW-SEBS | | | | | | |
| PA9T-a Viscosity number: 100ml/g | Supplied through the first downstream supply port | | | 30 | | |
| PA9T-b Viscosity number: 140ml/g | | | | | | |
| PA9T-c Viscosity number: 60ml/g | | | | | 30.0 | |
| PA9T-d Viscosity number: 70ml/g | | | 30.0 | | | |
| PA9T-e Viscosity number: 160ml/g | | | | | | 30.0 |
| DEP-a | Supplied through the second downstream supply port | | 10 | 10 | 10 | 10 |
| DEP-b | | | | | | |
| DEP-c | | | | | | |
| GF | | | 30 | 30 | 30 | 30 |
| Total | | | 100 | 100 | 100 | 100 |
| Average flaming time (1/16-inch thick test piece) | | Second | 3.8 | 3.5 | 4.4 | 3.2 |
| Maximum flaming time | | Second | 8.8 | 7.4 | 12.1 | 7.5 |
| Presence of flaming drip | | Yes/No | No | No | No | No |
| UL94 determination | | - | V-0 | V-0 | V-1 | V-0 |
| Amount of gas generation | | Point | 4 | 4 | 3 | 2 |
| Surface appearance | | | Good | Good | Good | Moderate |
| Number of shots until generation of mold deposits s | | Shot | 600 | >1000 | 450 | 450 |
| Thin-wall flowability (SSP in molding 1/64-inch rectangular piece) rectangular piece) | | Mpa | 3.4 | 6.9 | 2.8 | (8.0) |
| Heat resistance (HDT) 0.45 MPa load | | °C | >280 | >280 | >280 | >280 |

It is shown that the viscosity number of a polyamide being outside the prescribed range as in Comparative Examples 1 and 2 makes difficult the extrusion granulation and molding, particularly thin-wall molding, of the polyamide.

Comparison of Examples 1 to 7 with Comparative Examples 2 and 3 shows that the resin composition according to the present invention is excellent in all of the characteristics of flame retardancy, reduced gas generation, surface appearance, decreased mold deposits and thin-wall moldability.

Comparison of Example 1 and Example 4 also shows that the resin composition according to the present invention is more excellent in flame retardancy and decreased mold deposits.

It is shown that the resin compositions according to the present invention using PA9, T, of Examples 8 to 15 and 16 to 19 are excellent in all of the characteristics of flame retardancy, reduced gas generation, surface appearance, decreased mold deposits, thin-wall moldability and impact resistance.

The measurement of the resin compositions of Examples 16 to 19 for deflection temperature under load (low load HDT) shows that the compositions of all of the Examples have resistance to heat of 280°C or more and therefore can be applied to SMT-applicable components using lead-free solders.

Industrial Applicability

The present invention can provide a resin composition which has excellent characteristics such as being excellent in flame retardancy, impact resistance, and moldability into thin-walled components and capable of significantly suppressing gas generation during processing and substantially inhibiting the generation of deposits on a mold (mold deposits) during injection molding. Thus, the resin composition according to the present invention can be suitably used particularly in electric and electronic components and automobile electric and electronic components. The composition can be suitably used particularly in SMT-applicable components in the electrical and electronic field and a relay box material as an automobile electric and electronic component.

**Claims**

1. A resin composition comprising: a polyamide (A); a polyphenylene ether (B); and at least one phosphinate (C) selected from the group consisting of a phosphinate represented by formula (I) below, a diphosphinate represented by formula (II) below, and condensation products thereof, wherein the polyamide (A) has a viscosity number (as measured in the 96% sulfuric acid according to ISO 307 (1997)) of from 50 ml / g to 250 ml / g, the formulas (I) and (II) being represented by:

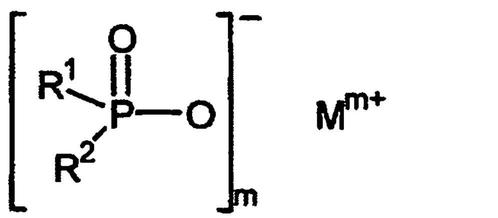

(I)

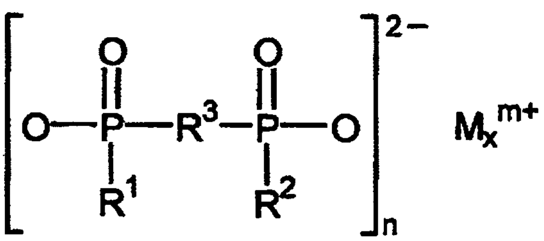

(II)

wherein $R^1$ and $R^2$ are the same or different and each represent straight-chain or branched $C_1$ to $C_6$ alkyl and / or aryl, or phenyl; $R^3$ represents straight-chain or branched $C_1$ to $C_{10}$ alkylene, $C_6$ to $C_{10}$ arylene, $C_6$ to $C_{10}$ alkylarylene, or $C_6$ to $C_{10}$ arylalkylene; M represents at least one selected from the group consisting of calcium (ion), magnesium (ion), aluminium (ion), zinc (ion), bismuth (ion), manganese (ion), sodium (ion), potassium (ion), and a protonated nitrogenous base; m represents 2 or 3; n represents 1 to 3; and x represents 1 or 2.).

2. The resin composition according to claim 1, wherein the viscosity number (as measured in the 96% sulfuric acid according to ISO 307 (1997)) of the polyamide (A) is from 70 ml / g (inclusive) to 150 ml / g (inclusive).

3. The resin composition according to claim 1, wherein the viscosity number (as measured in the 96% sulfuric acid according to ISO 307 (1997)) of the polyamide (A) is from 100 ml / g (inclusive) to 150 ml / g (inclusive).

4. The resin composition according to any one of claims 1 to 3, wherein the polyamide (A) is a semiaromatic polyamide.

5. The resin composition according to claim 4, wherein the semiaromatic polyamide comprises (a) dicarboxylic acid units comprising 60 to 100 mol% of terephthalic acid and (b) diamine units comprising 60 to 100 mol% of (b-1) 1,9-nonanediamine units and (b-2) 2-methyl-1,8-octanediamine units.

6. The resin composition according to claim 4, wherein the semiaromatic polyamide has a molar ratio of (b-1) 1,9-nonanediamine units to (b-2) 2-methyl-1,8-octanediamine units of from 60 / 40 to 95 / 5 for the diamine units.

**7.** The resin composition according to any one of claims 1 to 6, wherein the polyamide (A) has a terminal amino group concentration of from 5 μmol / g (inclusive) to 60 μmol / g (inclusive).

**8.** The resin composition according to claim 1, wherein the component (C) has an average particle diameter of from 0.5 μm (inclusive) to 40 μm (inclusive).

**9.** The resin composition according to claim 1, wherein a quantitative ratio of the polyamide (A) to the polyphenylene ether (B) is from 40 to 70 parts by mass of the polyamide (A) to 60 to 30 parts by mass of the polyphenylene ether (B) based on 100 parts by mass of the total of (A) and (B).

**10.** The resin composition according to claim 1, wherein an amount of the phosphinate (C) is from 1 to 50 parts by mass based on 100 parts by mass of the total of the polyamide (A) and the polyphenylene ether (B).

**11.** The resin composition according to claim 1, further comprising an appearance-improving agent selected from the group consisting of mineral oil and wax as component (D).

**12.** The resin composition according to claim 11, wherein an amount of the appearance-improving agent as the component (D) is from 0.1 to 10 parts by mass based on 100 parts by mass of the total of the polyamide (A) and the polyphenylene ether (B).

**13.** The resin composition according to claim 1, wherein the phosphinate as component (C) comprises 90 % by weight or more of a phosphinate represented by formula (I):

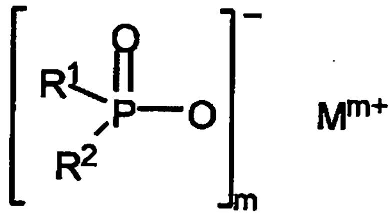

(I)

wherein $R^1$ and $R^2$ are the same or different and each represent straight-chain or branched $C_1$ to $C_6$ alkyl and / or aryl, or phenyl; M represents at least one selected from the group consisting of calcium (ion), magnesium (ion), aluminium (ion), zinc (ion), bismuth (ion), manganese (ion), sodium (ion), potassium (ion), and a protonated nitrogenous base; and m represents 2 or 3.

**14.** The resin composition according to claim 1, further comprising an impact modifier as component (E), which comprises a block copolymer containing at least one block composed mainly of an aromatic vinyl compound and at least one block composed mainly of a conjugated diene compound, and / or a hydrogenated product of the block copolymer.

**15.** The resin composition according to claim 1, further comprising, as component (F), 1 to 70 % by weight of an inorganic filler based on 100 % by weight of the whole resin composition inclusive of the inorganic filler.

**16.** A process for producing a resin composition comprising: a polyamide (A); a polyphenylene ether (B); and at least one phosphinate (C) selected from the group consisting of a phosphinate represented by formula (I) below, a diphosphinate represented by formula (II) below, and condensation products thereof, comprising:

adding the component (C) into a molten mixture of the component (A) and the component (B), the formulas (I) and (II) being represented by:

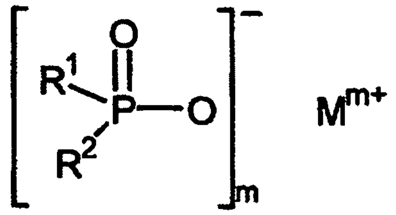

(I)

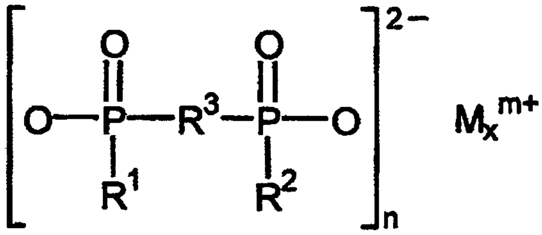

(II)

wherein $R^1$ and $R^2$ are the same or different and each represent straight-chain or branched $C_1$ to $C_6$ alkyl and / or aryl, or phenyl; $R^3$ represents straight-chain or branched $C_1$ to $C_{10}$ alkylene, $C_6$ to $C_{10}$ arylene, $C_6$ to $C_{10}$ alkylarylene, or $C_6$ to $C_{10}$ arylalkylene; M represents at least one selected from the group consisting of calcium (ion), magnesium (ion), aluminium (ion), zinc (ion), bismuth (ion), manganese (ion), sodium (ion), potassium (ion), and a protonated nitrogenous base; m represents 2 or 3; n represents 1 to 3; and x represents 1 or 2.

**17.** A process for producing a resin composition comprising: a polyamide (A); a polyphenylene ether (B); at least one phosphinate (C) selected from the group consisting of a phosphinate represented by formula (I) below, a diphosphinate represented by formula (II) below, and condensation products thereof; an appearance-improving agent (D); and an impact modifier (E), comprising at least the following two steps of:

(1) mixing the appearance-improving agent (D) with at least one selected from the group consisting of the polyamide (A), the polyphenylene ether (B), and the impact modifier (E) to produce a master batch; and
(2) melt-kneading the master batch with the residual components, the formulas (I) and (II) being represented by:

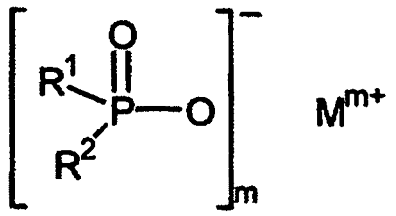

(I)

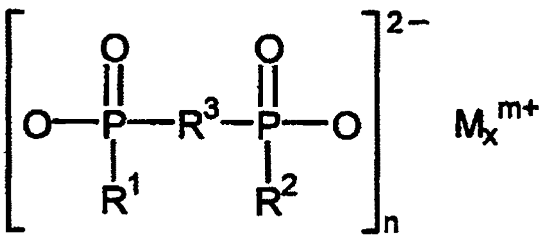

(II)

wherein $R^1$ and $R^2$ are the same or different and each represent straight-chain or branched $C_1$ to $C_6$ alkyl and / or aryl, or phenyl; $R^3$ represents straight-chain or branched $C_1$ to $C_{10}$ alkylene, $C_6$ to $C_{10}$ arylene, $C_6$ to $C_{10}$ alkylarylene, or $C_6$ to $C_{10}$ arylalkylene; M represents at least one selected from the group consisting of calcium (ion), magnesium

(ion), aluminium (ion), zinc (ion), bismuth (ion), manganese (ion), sodium (ion), potassium (ion), and a protonated nitrogenous base; m represents 2 or 3; n represents 1 to 3; and x represents 1 or 2.

**18.** A pellet obtained by the process according to claims 16 or 17.

**19.** A molded product obtained from the resin composition according to any one of claims 1 to 18.

**20.** A surface-mount technology applicable component obtained from the resin composition according to any one of claims 1 to 18.

**INTERNATIONAL SEARCH REPORT**

International application No.
PCT/JP2006/321948

A. CLASSIFICATION OF SUBJECT MATTER
*C08L77/00*(2006.01)i, *C08K5/5313*(2006.01)i, *C08L71/12*(2006.01)i

According to International Patent Classification (IPC) or to both national classification and IPC

B. FIELDS SEARCHED

Minimum documentation searched (classification system followed by classification symbols)
C08L77/00-77/12, C08K3/00-13/08, C08L71/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 2001-247751 A (Daicel Chemical Industries, Ltd.),<br>11 September, 2001 (11.09.01),<br>Claims; Par. No. [0007]; examples<br>& US 2001/0007888 A1 | 1-4,7-10,13,<br>15,18-20<br>1-20 |
| X<br><br>Y | JP 2002-161211 A (Daicel Chemical Industries, Ltd.),<br>04 June, 2002 (04.06.02),<br>Claims; Par. Nos. [0013], [0039]; examples<br>(Family: none) | 1-4,7-10,13,<br>15,18-20<br>1-20 |
| X<br><br>Y | JP 2001-335699 A (Daicel Chemical Industries, Ltd.),<br>04 December, 2001 (04.12.01),<br>Claims; Par. Nos. [0015], [0043]; examples<br>(Family: none) | 1-4,7-10,13,<br>15,18-20<br>1-20 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 December, 2006 (01.12.06) | 12 December, 2006 (12.12.06) |
| Name and mailing address of the ISA/<br>Japanese Patent Office<br><br>Facsimile No. | Authorized officer<br><br>Telephone No. |

Form PCT/ISA/210 (second sheet) (April 2005)

**INTERNATIONAL SEARCH REPORT**

International application No. PCT/JP2006/321948

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2005-220240 A (Mitsubishi Engineering-Plastics Corp.), 18 August, 2005 (18.08.05), Claims; Par. No. [0009] (Family: none) | 1-20 |
| Y | JP 2003-238697 A (Mitsubishi Engineering-Plastics Corp.), 27 August, 2003 (27.08.03), Claims; Par. No. [0008] (Family: none) | 1-20 |
| Y | JP 8-217972 A (Asahi Chemical Industry Co., Ltd.), 27 August, 1996 (27.08.96), Claims; Par. No. [0001] (Family: none) | 1-20 |
| Y | JP 2000-212434 A (Kuraray Co., Ltd.), 02 August, 2000 (02.08.00), Claims; Par. No. [0001] (Family: none) | 1-20 |
| Y | JP 2004-83792 A (Kuraray Co., Ltd.), 18 March, 2004 (18.03.04), Claims; Par. No. [0001] (Family: none) | 1-20 |
| A | JP 2004-331975 A (Clariant GmbH.), 25 November, 2004 (25.11.04), Full text & US 2004/0225040 A1 & EP 1475407 A2 | 1-20 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005118698 A
- JP 2001335699 A
- JP 7228689 A
- JP 52017880 A
- US 3306874 A
- US 3306875 A
- US 3257357 A
- US 3257358 A
- JP 50051197 A
- JP 52017880 B
- JP 63152628 B
- JP 2005179362 A
- EP 699708 A1
- JP 8073720 A
- JP 8048869 A
- JP 9124926 A
- JP 11181429 A
- JP 2000204239 A